# EUROPEAN PATENT APPLICATION

(11) **EP 4 507 310 A1**
(43) Date of publication of application: **12.02.2025**
(21) Application number: 23784713.2
(22) Date of filing: 31.03.2023
(51) Int. Cl.: H04N 19/90

(54) **DECODING DEVICE, ENCODING DEVICE, DECODING METHOD, AND ENCODING METHOD**

(30) Priority: 05.04.2022 US 202263327519 P; 17.05.2022 US 202263342816 P
(71) Applicant: Panasonic Intellectual Property Corporation of America, Torrance, CA 90504 (US)
(72) Inventor: TOMA, Tadamasa, Kadoma-shi, Osaka 571-0057 (JP); ABE, Kiyofumi, Kadoma-shi, Osaka 571-0057 (JP); NISHI, Takahiro, Kadoma-shi, Osaka 571-0057 (JP); LIM, Chong Soon, Singapore 469332 (SG); TEO, Han Boon, Singapore 469332 (SG); GAO, Jingying, Singapore 469332 (SG); YADAV, Praveen Kumar, Singapore 469332 (SG)
(74) Representative: Grünecker Patent- und Rechtsanwälte PartG mbB
(86) International application number: PCT/JP2023/013571
(87) International publication number: WO 2023/195426

(57) **Abstract**

A decoder (200) includes circuitry (251) and memory (252) coupled to the circuitry (251). In operation, the circuitry (251): decodes expression data indicating information expressed by a person; generates a person equivalent image corresponding to the person through a neural network according to the expression data and at least one profile image of the person; and outputs the person equivalent image.

## Description

### [Technical Field]

The present disclosure relates to a decoder, an encoder, a decoding method, and an encoding method.

### [Background Art]

With advancement in video coding technology, from H.261 and MPEG-1 to H.264/AVC (Advanced Video Coding), MPEG-LA, H.265/HEVC (High Efficiency Video Coding) and H.266/VVC (Versatile Video Codec), there remains a constant need to provide improvements and optimizations to the video coding technology to process an ever-increasing amount of digital video data in various applications. The present disclosure relates to further advancements, improvements and optimizations in video coding.

Note that Non Patent Literature (NPL) 1 relates to one example of a conventional standard regarding the above-described video coding technology.

### Citation List

### Non Patent Literature

NPL 1: H.265 (ISO/IEC 23008-2 HEVC)/HEVC (High Efficiency Video Coding)

### [Summary of Invention]

### [Technical Problem]

Regarding the encoding scheme as described above, proposals of new schemes have been desired in order to (i) improve coding efficiency, enhance image quality, reduce processing amounts, reduce circuit scales, or (ii) appropriately select an element or an operation. The element is, for example, a filter, a block, a size, a motion vector, a reference picture, or a reference block.

The present disclosure provides, for example, a configuration or a method which can contribute to at least one of increase in coding efficiency, increase in image quality, reduction in processing amount, reduction in circuit scale, appropriate selection of an element or an operation, etc. It is to be noted that the present disclosure may encompass possible configurations or methods which can contribute to advantages other than the above advantages.

### [Solution to Problem]

For example, a decoder according to one aspect of the present disclosure is a decoder including circuitry and memory coupled to the circuitry. In operation, the circuitry: decodes expression data indicating information expressed by a person; generates a person equivalent image through a neural network according to the expression data and at least one profile image of the person, the person equivalent image corresponding to the person; and outputs the person equivalent image.

Each of embodiments, or each of part of constituent elements and methods in the present disclosure enables, for example, at least one of the following: improvement in coding efficiency, enhancement in image quality, reduction in processing amount of encoding/decoding, reduction in circuit scale, improvement in processing speed of encoding/decoding, etc. Alternatively, each of embodiments, or each of part of constituent elements and methods in the present disclosure enables, in encoding and decoding, appropriate selection of an element or an operation. The element is, for example, a filter, a block, a size, a motion vector, a reference picture, or a reference block. It is to be noted that the present disclosure includes disclosure regarding configurations and methods which may provide advantages other than the above-described ones. Examples of such configurations and methods include a configuration or method for improving coding efficiency while reducing increase in processing amount.

Additional benefits and advantages according to an aspect of the present disclosure will become apparent from the specification and drawings. The benefits and/or advantages may be individually obtained by the various embodiments and features of the specification and drawings, and not all of which need to be provided in order to obtain one or more of such benefits and/or advantages.

It is to be noted that these general or specific aspects may be implemented using a system, an integrated circuit, a computer program, or a computer readable medium (recording medium) such as a CD-ROM, or any combination of systems, methods, integrated circuits, computer programs, and media.

### [Advantageous Effects of Invention]

A configuration or method according to an aspect of the present disclosure enables, for example, at least one of the following: improvement in coding efficiency, enhancement in image quality, reduction in processing amount, reduction in circuit scale, improvement in processing speed, appropriate selection of an element or an operation, etc. It is to be noted that the configuration or method according to an aspect of the present disclosure may provide advantages other than the above-described ones.

### [Brief Description of Drawings]

[FIG. 1]

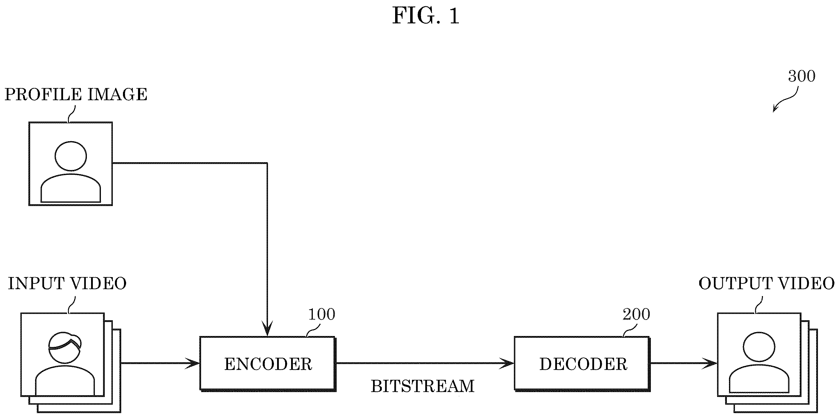

   FIG. 1 is a conceptual diagram illustrating a video teleconferencing system according to Aspect 1.
[FIG. 2]

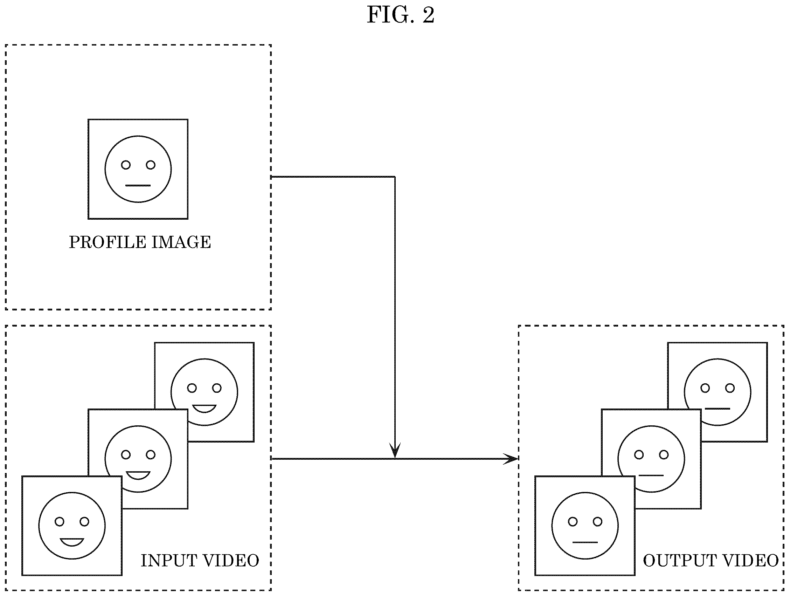

   FIG. 2 is a conceptual diagram illustrating an example of replacing a video of a person with a profile image of the person.
[FIG. 3]

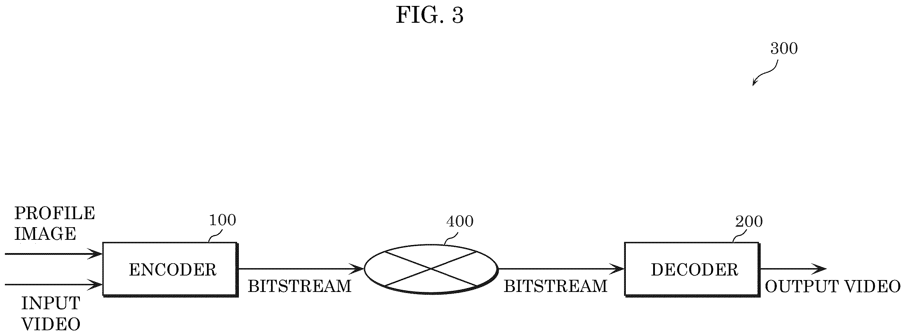

   FIG. 3 is a block diagram illustrating an exemplary configuration of a video teleconferencing system according to Aspect 2.
[FIG. 4]

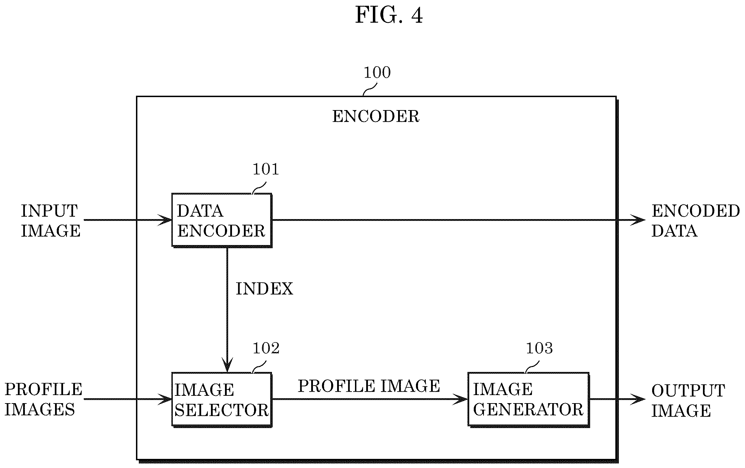

   FIG. 4 is a block diagram illustrating an exemplary configuration of an encoder according to Aspect 2.
[FIG. 5]

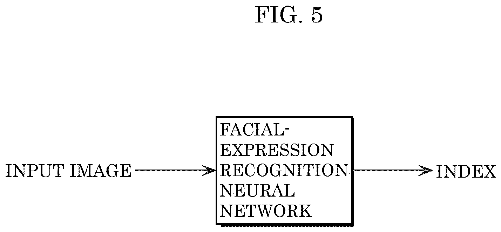

   FIG. 5 is a conceptual diagram illustrating an example of determining an index for an input image through a facial-expression-recognition neural network.
[FIG. 6]

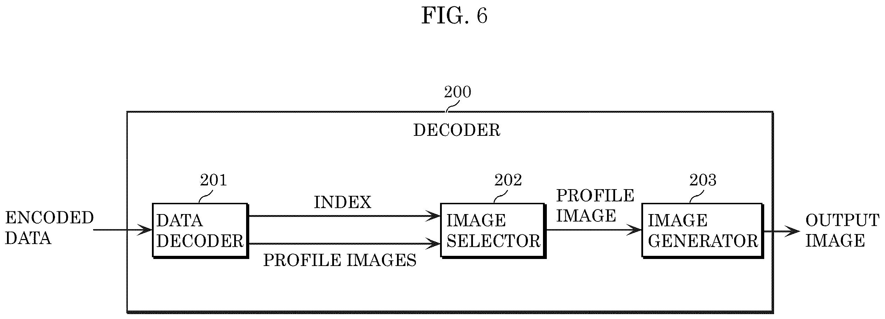

   FIG. 6 is a block diagram illustrating an exemplary configuration of a decoder according to Aspect 2.
[FIG. 7]

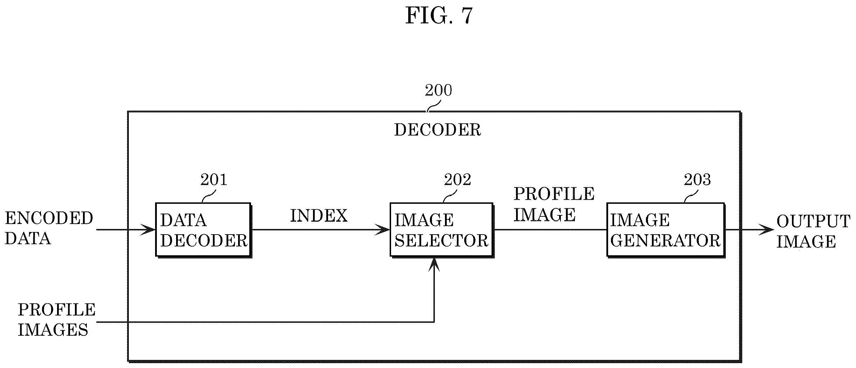

   FIG. 7 is a block diagram illustrating another exemplary configuration of the decoder according to Aspect 2.
[FIG. 8]

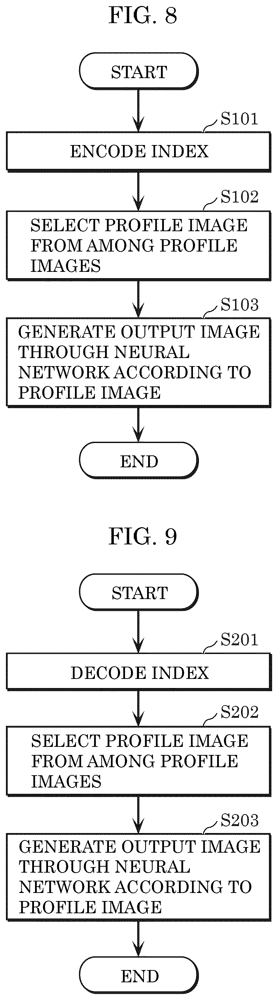

   FIG. 8 is a flow chart illustrating an exemplary operation performed by the encoder according to Aspect 2.
[FIG. 9]
   FIG. 9 is a flow chart illustrating an exemplary operation performed by the decoder according to Aspect 2.
[FIG. 10]

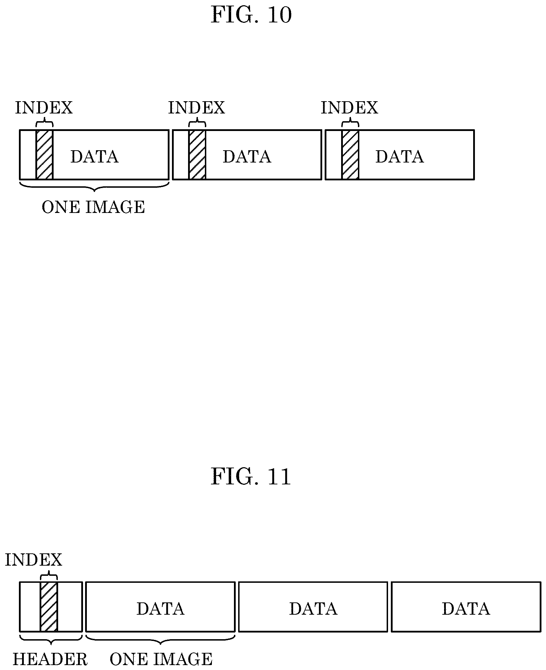

   FIG. 10 is a conceptual diagram illustrating an example of the location of an index in a bitstream.
[FIG. 11]
   FIG. 11 is a conceptual diagram illustrating another example of the location of an index in a bitstream.
[FIG. 12]

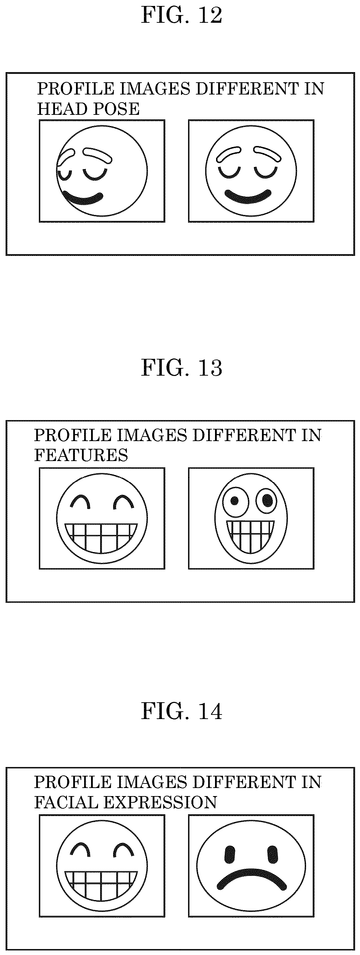

   FIG. 12 is a conceptual diagram illustrating an example of multiple profile images.
[FIG. 13]
   FIG. 13 is a conceptual diagram illustrating another example of multiple profile images.
[FIG. 14]
   FIG. 14 is a conceptual diagram illustrating yet another example of multiple profile images.
[FIG. 15]

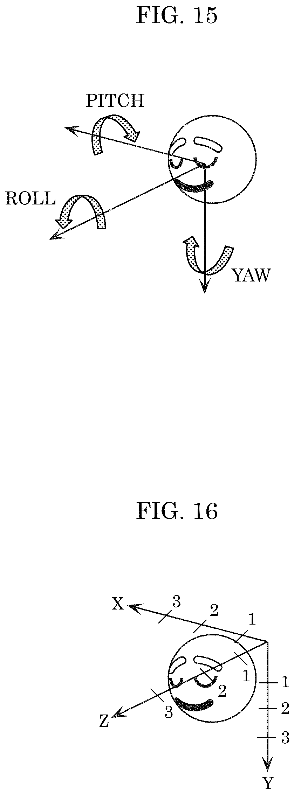

   FIG. 15 is a conceptual diagram illustrating an example of data represented by coordinates.
[FIG. 16]
   FIG. 16 is a conceptual diagram illustrating another example of data represented by coordinates.
[FIG. 17]

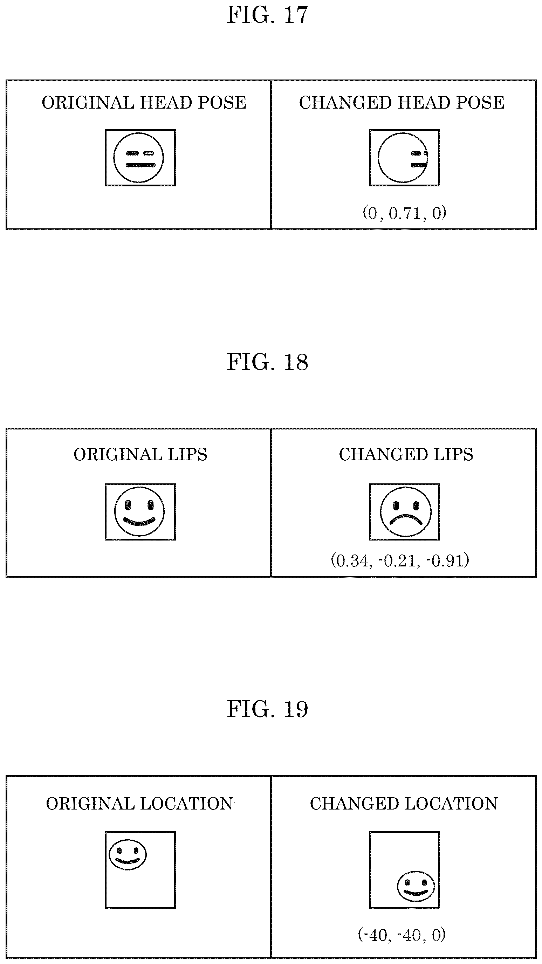

   FIG. 17 is a conceptual diagram illustrating an example of change in head pose.
[FIG. 18]
   FIG. 18 is a conceptual diagram illustrating an example of change in lips.
[FIG. 19]
   FIG. 19 is a conceptual diagram illustrating an example of a head movement corresponding to a head location.
[FIG. 20]

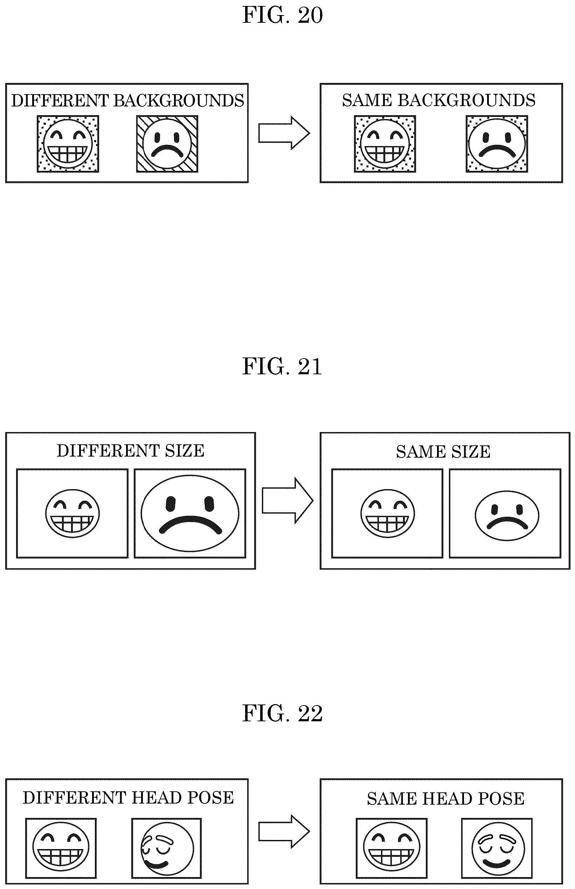

   FIG. 20 is a conceptual diagram illustrating an example of normalization.
[FIG. 21]
   FIG. 21 is a conceptual diagram illustrating another example of normalization.
[FIG. 22]
   FIG. 22 is a conceptual diagram illustrating yet another example of normalization.
[FIG. 23]

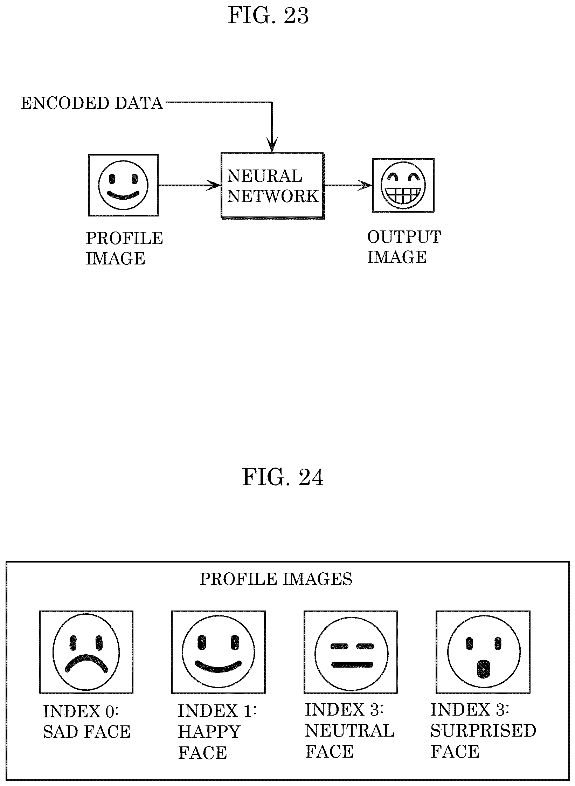

   FIG. 23 is a conceptual diagram illustrating an example of generating an output image through a neural network according to encoded data and a profile image.
[FIG. 24]
   FIG. 24 is a conceptual diagram illustrating an example of indexing multiple profile images.
[FIG. 25]

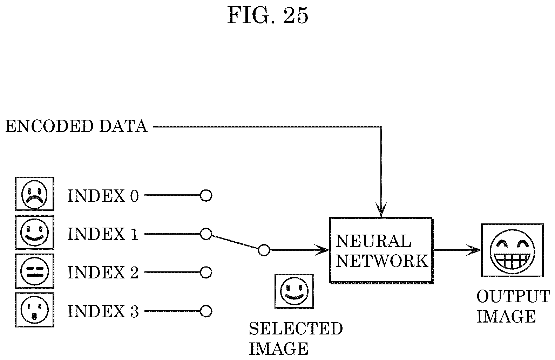

   FIG. 25 is a conceptual diagram illustrating selection of a profile image and generation of an output image.
[FIG. 26]

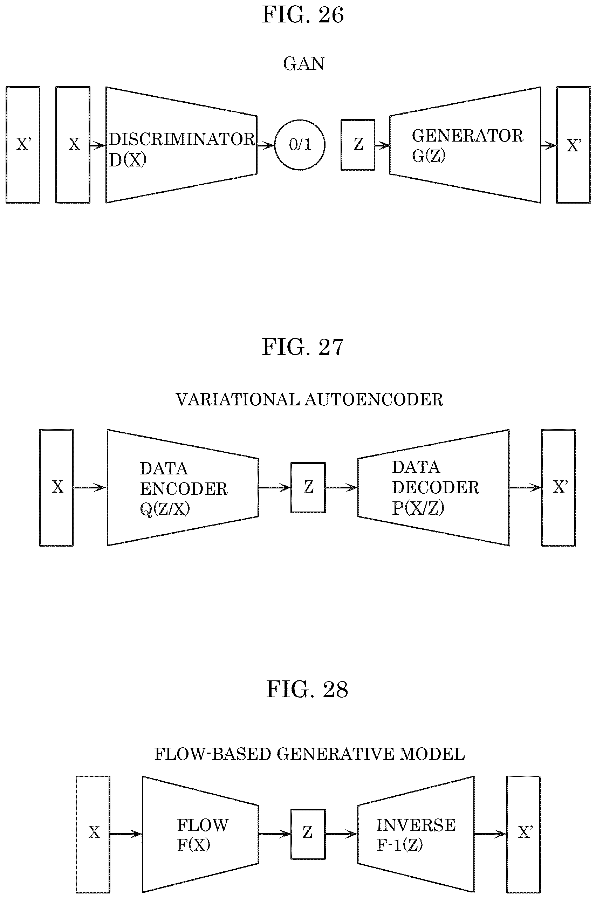

   FIG. 26 is a conceptual diagram illustrating an example of a neural network for generating an output image.
[FIG. 27]
   FIG. 27 is a conceptual diagram illustrating another example of the neural network for generating an output image.
[FIG. 28]
   FIG. 28 is a conceptual diagram illustrating yet another example of the neural network for generating an output image.
[FIG. 29]

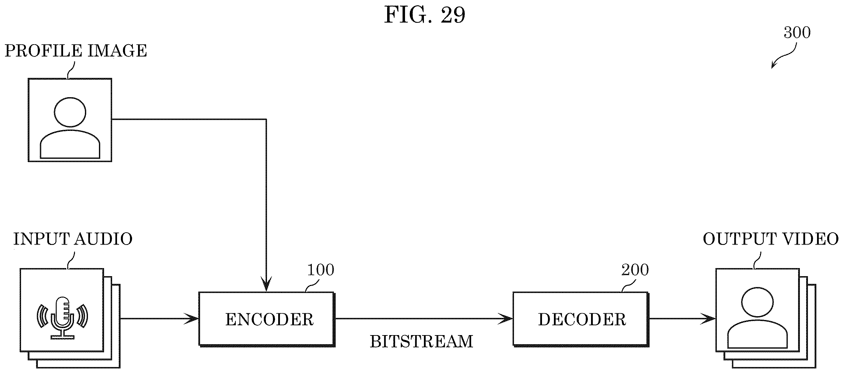

   FIG. 29 is a conceptual diagram illustrating a video teleconferencing system according to Aspect 3.
[FIG. 30]

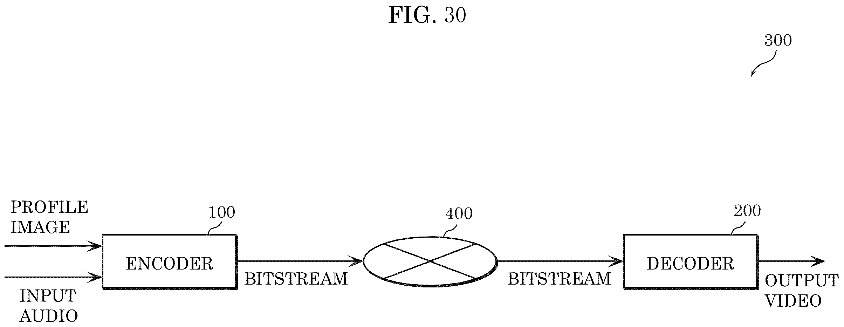

   FIG. 30 is a block diagram illustrating an exemplary configuration of the video teleconferencing system according to Aspect 3.
[FIG. 31]

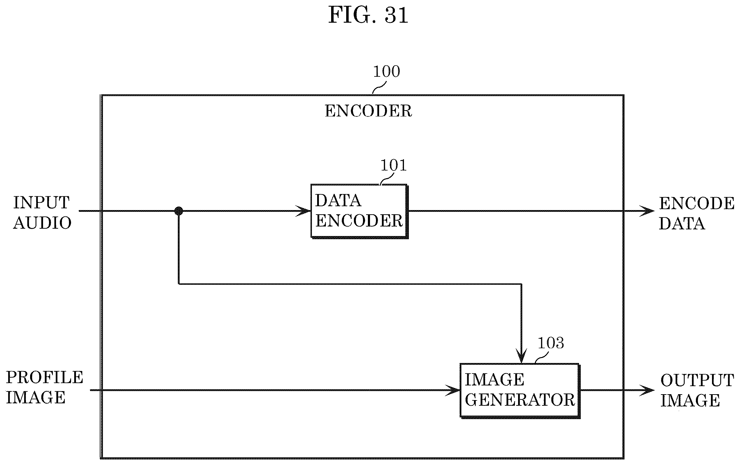

   FIG. 31 is a block diagram illustrating an exemplary configuration of an encoder according to Aspect 3.
[FIG. 32]

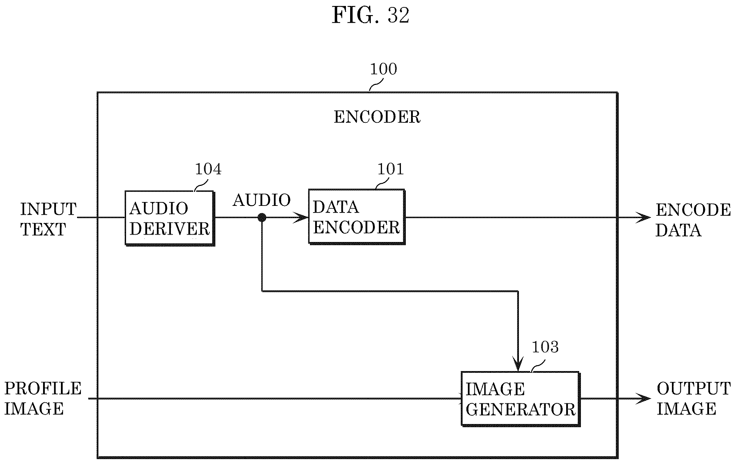

   FIG. 32 is a block diagram illustrating another exemplary configuration of the encoder according to Aspect 3.
[FIG. 33]

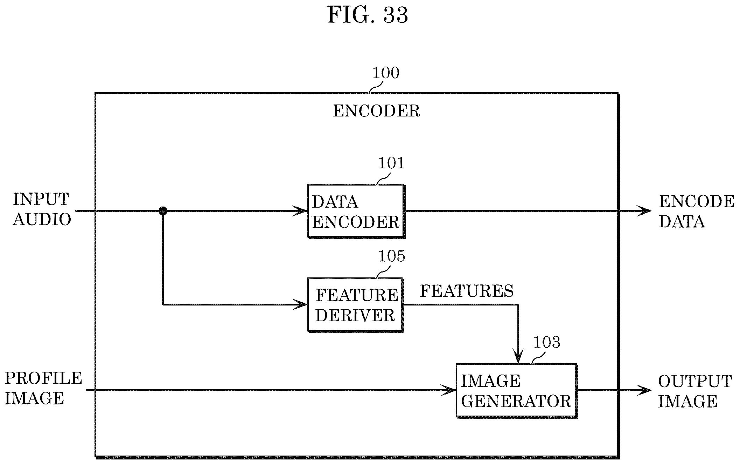

   FIG. 33 is a block diagram illustrating yet another exemplary configuration of the encoder according to Aspect 3.
[FIG. 34]

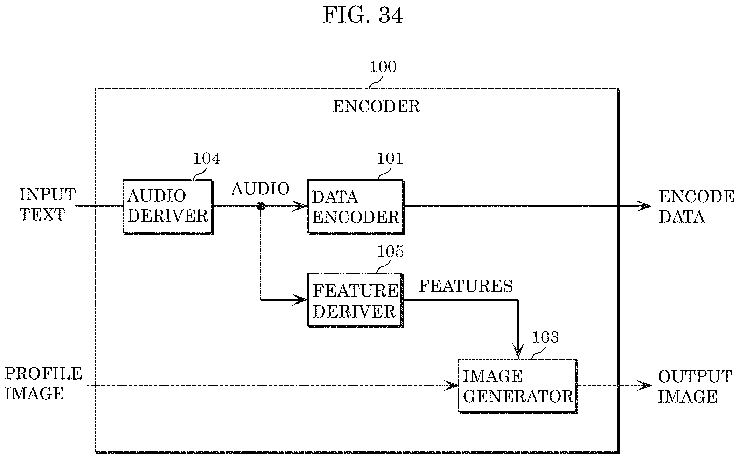

   FIG. 34 is a block diagram illustrating yet another exemplary configuration of the encoder according to Aspect 3.
[FIG. 35]

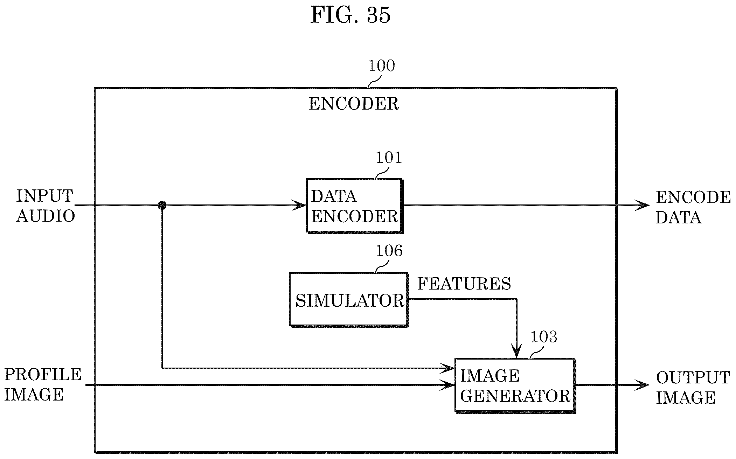

   FIG. 35 is a block diagram illustrating yet another exemplary configuration of the encoder according to Aspect 3.
[FIG. 36]

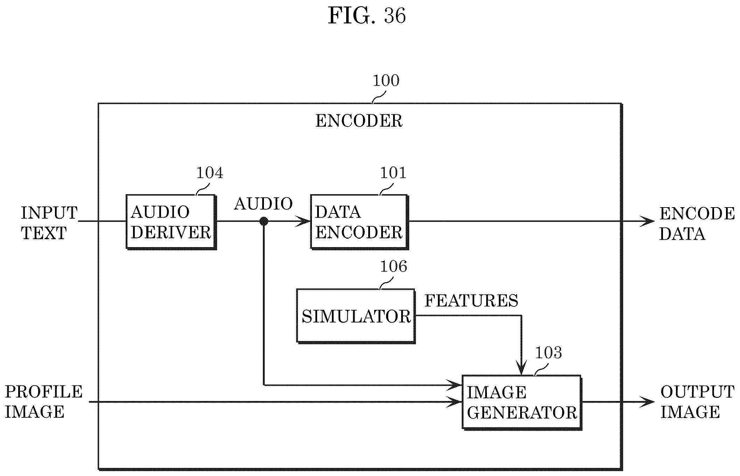

   FIG. 36 is a block diagram illustrating yet another exemplary configuration of the encoder according to Aspect 3.
[FIG. 37]

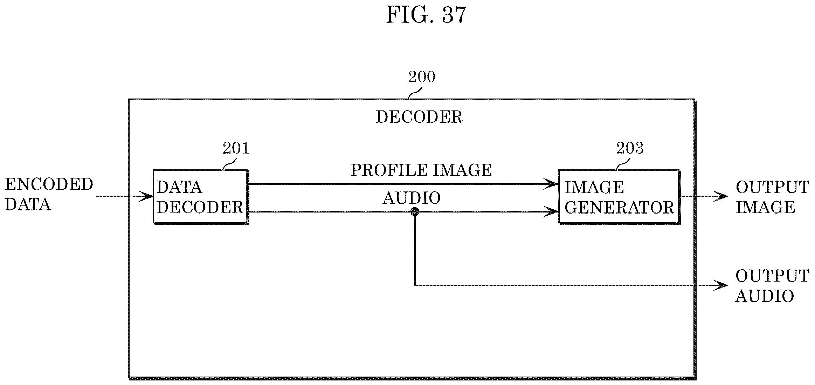

   FIG. 37 is a block diagram illustrating an exemplary configuration of a decoder according to Aspect 3.
[FIG. 38]

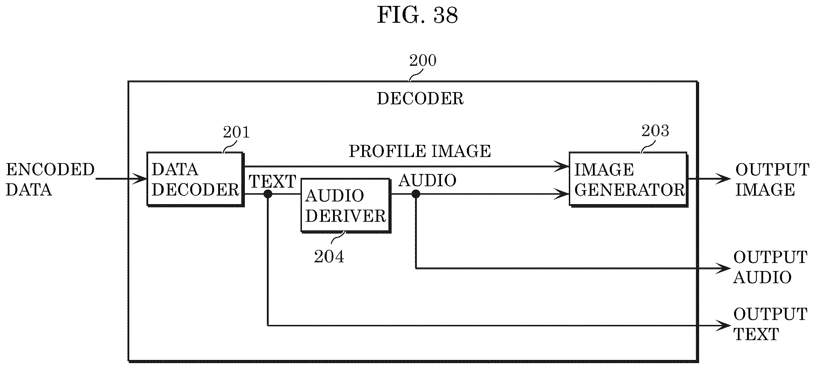

   FIG. 38 is a block diagram illustrating another exemplary configuration of the decoder according to Aspect 3.
[FIG. 39]

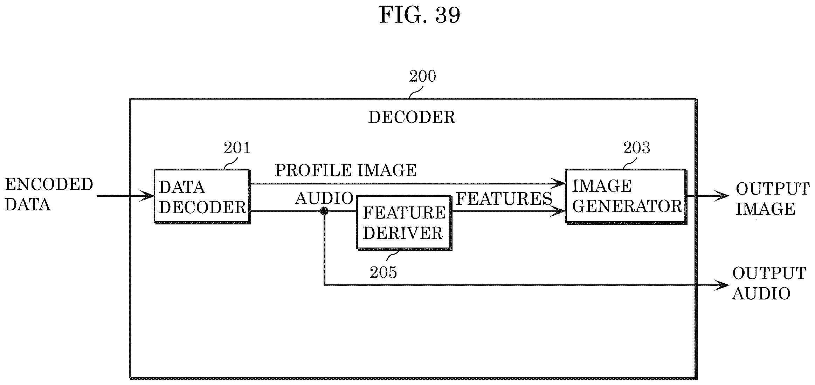

   FIG. 39 is a block diagram illustrating yet another exemplary configuration of the decoder according to Aspect 3.
[FIG. 40]

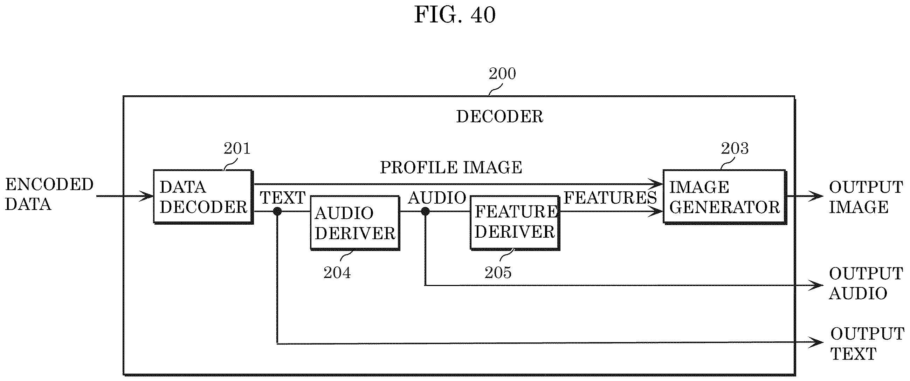

   FIG. 40 is a block diagram illustrating yet another exemplary configuration of the decoder according to Aspect 3.
[FIG. 41]

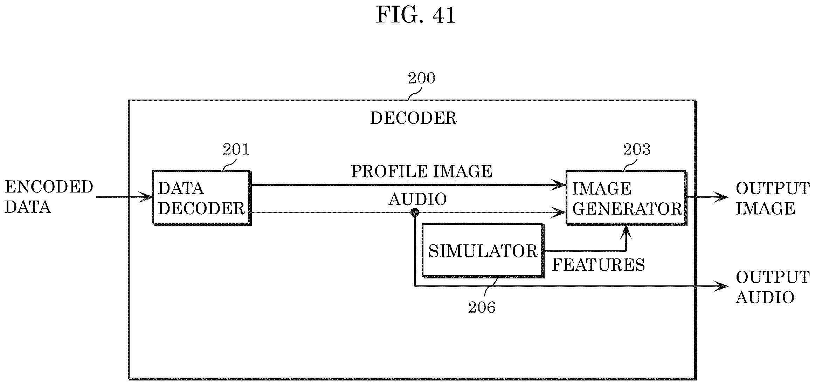

   FIG. 41 is a block diagram illustrating yet another exemplary configuration of the decoder according to Aspect 3.
[FIG. 42]

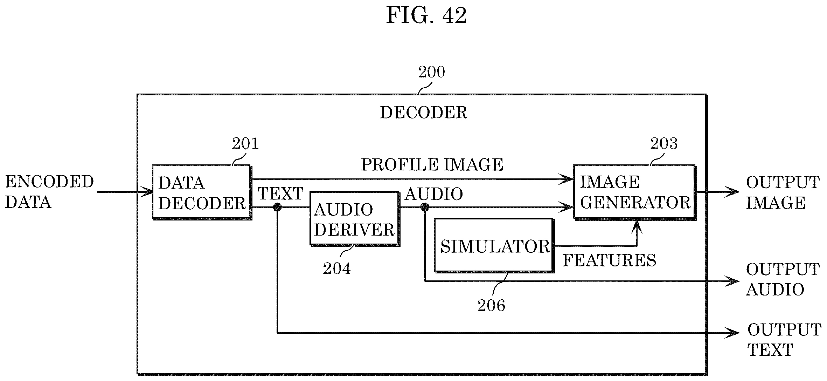

   FIG. 42 is a block diagram illustrating yet another exemplary configuration of the decoder according to Aspect 3.
[FIG. 43]

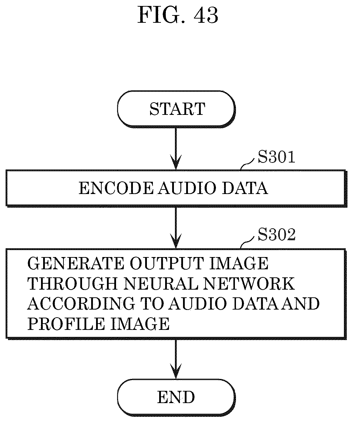

   FIG. 43 is a flow chart illustrating an exemplary operation performed by the encoder according to Aspect 3.
[FIG. 44]

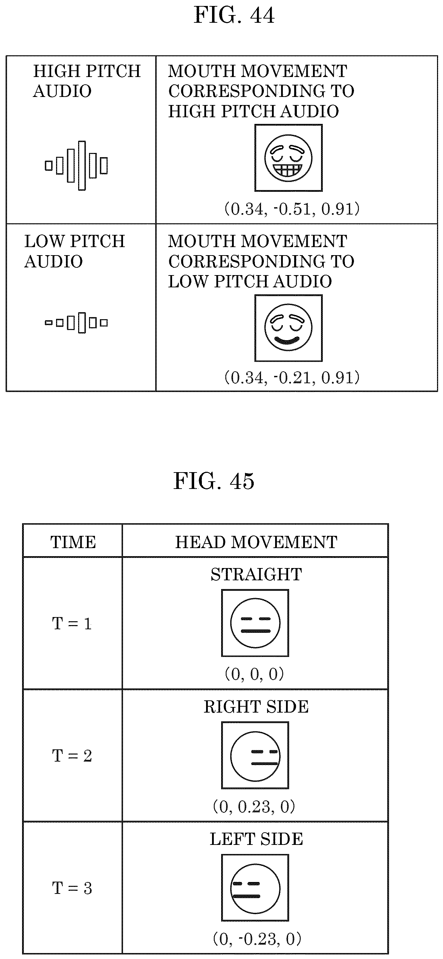

   FIG. 44 is a conceptual diagram illustrating an example of a mouth movement corresponding to a different audio data feature.
[FIG. 45]
   FIG. 45 is a conceptual diagram illustrating an example of a head movement corresponding to a head pose.
[FIG. 46]

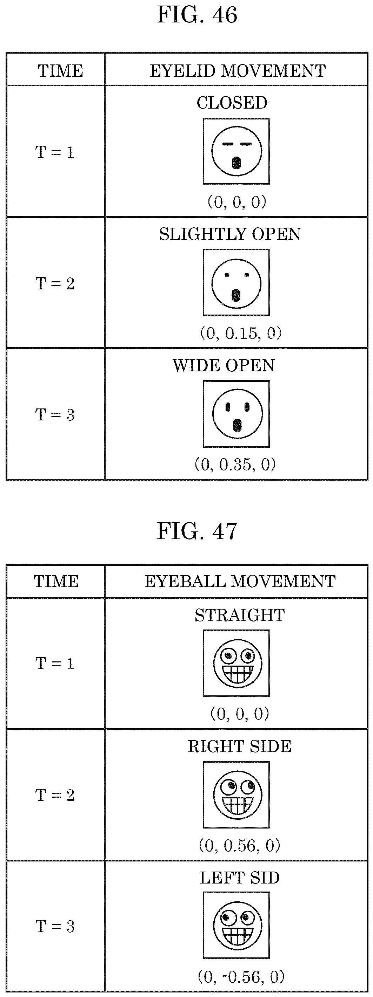

   FIG. 46 is a conceptual diagram illustrating an example of an eye movement.
[FIG. 47]
   FIG. 47 is a conceptual diagram illustrating another example of an eye movement.
   [FIG. 48]

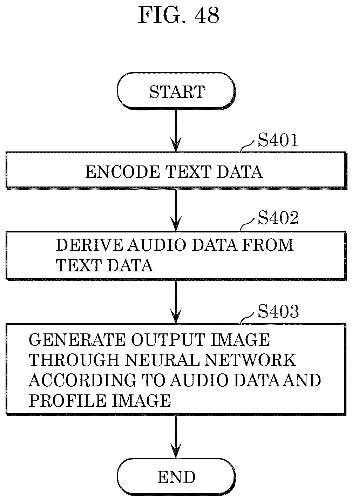

   FIG. 48 is a flow chart illustrating another exemplary operation performed by the encoder according to Aspect 3.
[FIG. 49]

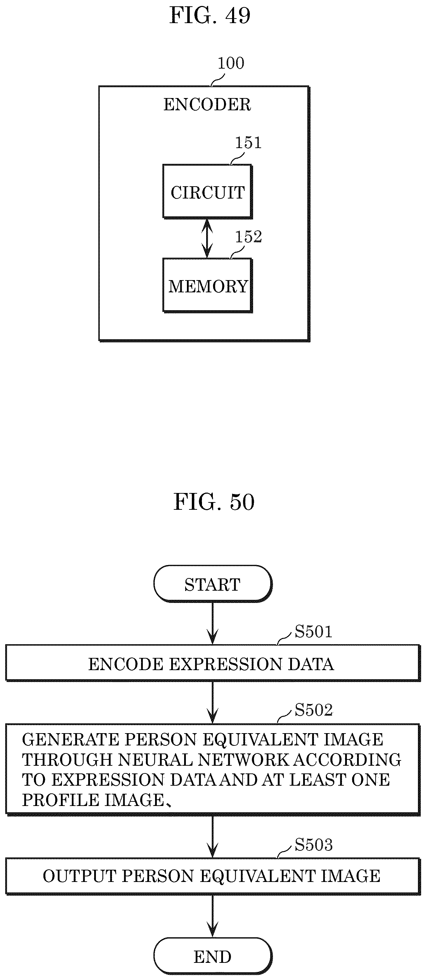

   FIG. 49 is a block diagram illustrating an exemplary configuration of an encoder.
[FIG. 50]
   FIG. 50 is a flow chart illustrating an exemplary basic operation performed by the encoder.
[FIG. 51]

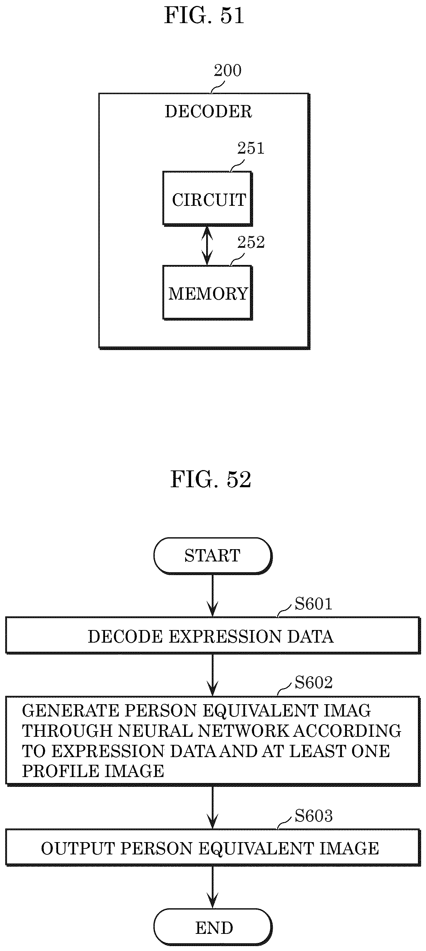

   FIG. 51 is a block diagram illustrating an exemplary configuration of a decoder.
[FIG. 52]
   FIG. 52 is a flow chart illustrating an exemplary basic operation performed by the decoder.
[FIG. 53]

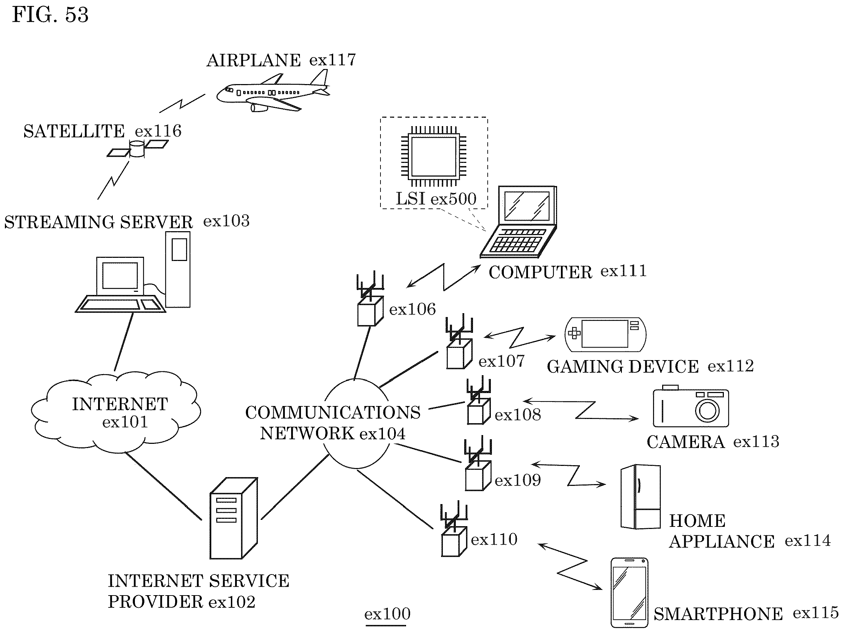

   FIG. 53 is a diagram illustrating an overall configuration of a content providing system for implementing a content distribution service.
[FIG. 54]

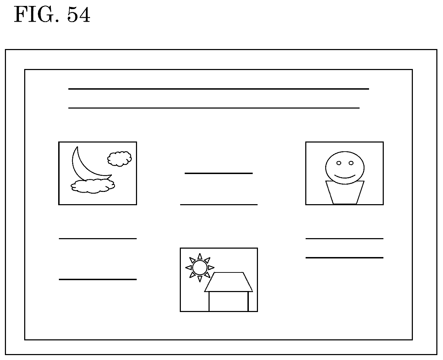

   FIG. 54 is a diagram illustrating an example of a display screen of a web page.
[FIG. 55]

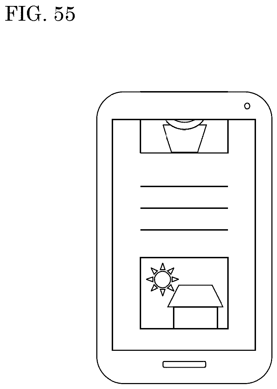

   FIG. 55 is a diagram illustrating an example of a display screen of a web page.
[FIG. 56]

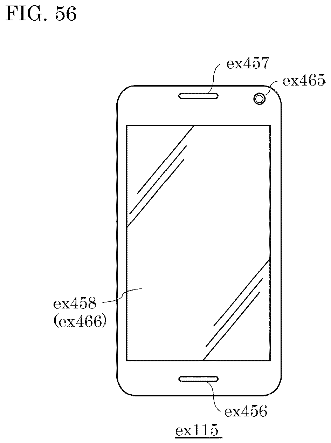

   FIG. 56 is a diagram illustrating one example of a smartphone.
[FIG. 57]

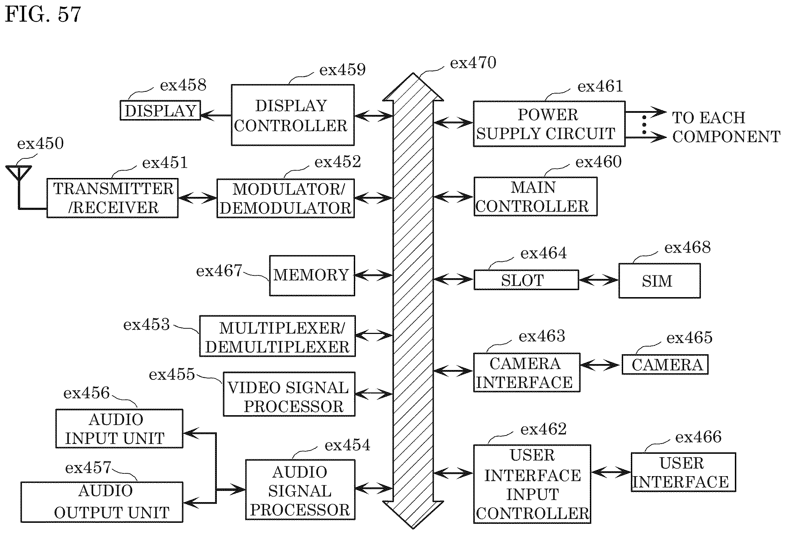

   FIG. 57 is a block diagram illustrating an example of a configuration of a smartphone.

### [Description of Embodiments]

### [Introduction]

Video coding technologies may be used in a video teleconferencing system. For example, an encoder at a first site encodes a video into a bitstream, which is then transmitted from the first site to a second site. A decoder at the second site decodes the video from the bitstream. Meanwhile, an encoder at the second site encodes a video into a bitstream, which is then transmitted from the second site to the first site. A decoder at the first site decodes the video from the bitstream.

Through the above operations, the video teleconferencing system allows videos to be exchanged between the first site and the second site. Thus, a video of a person at the first site is displayed at the second site, and a video of a person at the second site is displayed at the first site. Because videos have large code amounts, transmitting videos in bitstreams may sometimes be difficult. Transmitting videos in bitstreams may also be undesirable in view of privacy protection. For these reasons, profile images of people may be used instead of videos.

Unfortunately, fixed profile images may fail to convey sufficient visual information expressed by people and therefore may prevent smooth communication. This may result in a waste of time and resources.

In view of this, the decoder according to Example 1 is a decoder including circuitry and memory coupled to the circuitry, in which in operation, the circuitry: decodes expression data indicating information expressed by a person; generates a person equivalent image through a neural network according to the expression data and at least one profile image of the person, the person equivalent image corresponding to the person; and outputs the person equivalent image.

Thus, it may be possible to cause the output person equivalent image to reflect the information expressed by the person. This may facilitate visually conveying the information expressed by the person, and therefore promote smooth communication. As a result, a waste of time and resources may be prevented.

Moreover, the decoder according to Example 2 may be the decoder according to Example 1, in which the expression data includes data originated from a video of the person.

Thus, it may be possible to cause the output person equivalent image to reflect the data originated from the video of the person. This may enable outputting a person equivalent image that matches the video of the person.

Moreover, the decoder according to Example 3 may be the decoder according to Example 1 or 2, in which the expression data includes audio data of the person.

Thus, it may be possible to cause the output person equivalent image to reflect the audio data of the person. This may enable outputting a person equivalent image that matches the audio data of the person.

Moreover, the decoder according to Example 4 may be the decoder according to any of Examples 1 to 3, in which the at least one profile image is composed of a plurality of profile images, and the circuitry: selects one profile image from among the plurality of profile images according to the expression data; and generates the person equivalent image through the neural network according to the one profile image.

Thus, it may be possible to select, from among the profile images, a profile image corresponding to the information expressed by the person. It may then be possible to generate, from the profile image corresponding to the information expressed by the person, the output person equivalent image. This may enable outputting a person equivalent image that matches the information expressed by the person.

Moreover, the decoder according to Example 5 may be the decoder according to Example 4, in which the expression data includes an index indicating a facial expression of the person, and the plurality of profile images correspond to a plurality of facial expressions of the person.

Thus, it may be possible to cause the output person equivalent image to reflect the facial expression of the person. This may enable outputting a person equivalent image that matches the facial expression of the person. It may also be possible to reduce the code amount because the index is considered to have a small code amount.

Moreover, the decoder according to Example 6 may be the decoder according to any of Examples 1 to 5, in which the circuitry decodes the expression data from each of data regions in a bitstream.

Thus, it may be possible to cause the output person equivalent image to reflect any of different states for different data regions in the bitstream. This may enable causing the person equivalent image to reflect the person's timely state.

Moreover, the decoder according to Example 7 may be the decoder according to any of Examples 1 to 5, in which the circuitry decodes the expression data from a header of a bitstream.

Thus, it may be possible to cause the output person equivalent image to reflect a fixed state in the bitstream. It may then be possible to reduce the code amount.

Moreover, the decoder according to Example 8 may be the decoder according to any of Examples 1 to 7, in which the expression data includes data indicating at least one of a facial expression, a head pose, a facial part movement, and a head movement.

Thus, it may be possible to cause the output person equivalent image to reflect an expression, such as the facial expression of the person. This may enable outputting a person equivalent image that matches an expression, such as the facial expression of the person.

Moreover, the decoder according to Example 9 may be the decoder according to any of Examples 1 to 8, in which the expression data includes data represented by coordinates.

Thus, it may be possible to precisely represent a spatial position related to the expression data. This may enable causing the output person equivalent image to more precisely reflect the information expressed by the person.

Moreover, the decoder according to Example 10 may be the decoder according to any of Examples 1 to 9, in which the circuitry decodes the at least one profile image.

Thus, it may be possible to use a profile image not stored in the memory. This may enable reducing the memory capacity. It may also be possible to use, in decoding, a profile image designated in encoding. This may enable consistent encoding and decoding operations.

Moreover, the decoder according to Example 11 may be the decoder according to any of Examples 1 to 10, in which the circuitry: decodes the expression data from a first bitstream; and decodes the at least one profile image from a second bitstream different from the first bitstream.

Thus, it may be possible to manage the expression data and the profile image separately from each other. It may then be possible to efficiently update each of the expression data and the profile image.

Moreover, the decoder according to Example 12 may be the decoder according to any of Examples 1 to 9, in which the circuitry reads the at least one profile image from the memory.

Thus, it may be possible to skip decoding the profile image. This may enable reducing the processing amount and the code amount.

Moreover, the decoder according to Example 13 may be the decoder according to Example 3, in which the at least one profile image is composed of one profile image, and the circuitry: derives, from the audio data, a first feature set indicating a mouth movement; and generates the person equivalent image through the neural network according to the first feature set and the one profile image.

Thus, it may be possible to derive, from audio data related to a mouth movement, the first feature set that accurately indicates the mouth movement. It may then be possible to cause the output person equivalent image to reflect the mouth movement. This may enable outputting a person equivalent image that accurately reflects the information expressed by the person.

Moreover, the decoder according to Example 14 may be the decoder according to Example 3 or 13, in which the at least one profile image is composed of one profile image, and the circuitry: derives, by simulating a head movement or an eye movement, a second feature set indicating the head movement or the eye movement; and generates the person equivalent image through the neural network according to the audio data, the second feature set, and the one profile image.

Thus, it may be possible to match the output person equivalent image to the simulated head movement or eye movement. This may enable outputting a person equivalent image that looks more natural and not odd.

Moreover, the decoder according to Example 15 may be the decoder according to any of Examples 3, 13, and 14, in which the circuitry matches a facial expression in the person equivalent image to a facial expression inferred from the audio data.

Thus, it may be possible to cause the output person equivalent image to reflect the facial expression corresponding to the audio data. This may enable outputting a person equivalent image that matches the facial expression of the person.

Moreover, the encoder according to Example 16 may be an encoder including circuitry and memory coupled to the circuitry, in which in operation, the circuitry: encodes expression data indicating information expressed by a person; generates a person equivalent image through a neural network according to the expression data and at least one profile image of the person, the person equivalent image corresponding to the person; and outputs the person equivalent image.

Thus, in a decoding environment corresponding to the encoding environment, it may be possible to cause the output person equivalent image to reflect the information expressed by the person. This may facilitate visually conveying the information expressed by the person, and therefore promote smooth communication. As a result, a waste of time and resources may be prevented. It may also be possible to output, for a checking purpose in the encoding environment, a person equivalent image expected to be outputted in the decoding environment corresponding to the encoding environment.

Moreover, the encoder according to Example 17 may be the encoder according to Example 16, in which the expression data includes data originated from a video of the person.

Thus, it may be possible to cause the output person equivalent image to reflect the data originated from the video of the person. This may enable outputting a person equivalent image that matches the video of the person.

Moreover, the encoder according to Example 18 may be the encoder according to Example 16 or 17, in which the expression data includes audio data of the person.

Thus, it may be possible to cause the output person equivalent image to reflect the audio data of the person. This may enable outputting a person equivalent image that matches the audio data of the person.

Moreover, the encoder according to Example 19 may be the encoder according to any of Examples 16 to 18, in which the at least one profile image is composed of a plurality of profile images, and the circuitry: selects one profile image from among the plurality of profile images according to the expression data; and generates the person equivalent image through the neural network according to the one profile image.

Thus, it may be possible to select, from among the profile images, a profile image corresponding to the information expressed by the person. It may then be possible to generate, from the profile image corresponding to the information expressed by the person, the output person equivalent image. This may enable outputting a person equivalent image that matches the information expressed by the person.

Moreover, the encoder according to Example 20 may be the encoder according to Example 19, in which the expression data includes an index indicating a facial expression of the person, and the plurality of profile images correspond to a plurality of facial expressions of the person.

Thus, it may be possible to cause the output person equivalent image to reflect the facial expression of the person. This may enable outputting a person equivalent image that matches the facial expression of the person. It may also be possible to reduce the code amount because the index is considered to have a small code amount.

Moreover, the encoder according to Example 21 may be the encoder according to Example 20, in which the circuitry derives the index through a facial-expression-recognition neural network according to the video of the person.

Thus, it is possible to derive an index corresponding to a facial expression recognized accurately from the video of the person. This may enable causing the output person equivalent image to accurately reflect the facial expression of the person.

Moreover, the encoder according to Example 22 may be the encoder according to any of Examples 16 to 21, in which the circuitry encodes the expression data into each of data regions in a bitstream.

Thus, it may be possible to cause the output person equivalent image to reflect any of different states for different data regions in the bitstream. This may enable causing the person equivalent image to reflect the person's timely state.

Moreover, the encoder according to Example 23 may be the encoder according to any of Examples 16 to 21, in which the circuitry encodes the expression data into a header of a bitstream.

Thus, it may be possible to cause the output person equivalent image to reflect a fixed state in the bitstream. It may then be possible to reduce the code amount.

Moreover, the encoder according to Example 24 may be the encoder according to any of Examples 16 to 23, in which the expression data includes data indicating at least one of a facial expression, a head pose, a facial part movement, and a head movement.

Thus, it may be possible to cause the output person equivalent image to reflect an expression, such as the facial expression of the person. This may enable outputting a person equivalent image that matches an expression, such as the facial expression of the person.

Moreover, the encoder according to Example 25 may be the encoder according to any of Examples 16 to 24, in which the expression data includes data represented by coordinates.

Thus, it may be possible to precisely represent a spatial position related to the expression data. This may enable causing the output person equivalent image to more precisely reflect the information expressed by the person.

Moreover, the encoder according to Example 26 may be the encoder according to any of Examples 16 to 25, in which the circuitry encodes the at least one profile image.

Thus, in the decoding environment corresponding to the encoding environment, it may be possible to use a profile image not stored in the memory. This may enable reducing the memory capacity in the decoding environment. It may also be possible to use, in decoding, a profile image designated in encoding. This may enable consistent encoding and decoding operations.

Moreover, the encoder according to Example 27 may be the encoder according to any of Examples 16 to 26, in which the circuitry: encodes the expression data into a first bitstream; and encodes the at least one profile image into a second bitstream different from the first bitstream.

Thus, it may be possible to manage the expression data and the profile image separately from each other. It may then be possible to efficiently update each of the expression data and the profile image.

Moreover, the encoder according to Example 28 may be the encoder according to any of Examples 16 to 27, in which the circuitry reads the at least one profile image from the memory.

Thus, it may be possible to reduce the processing amount compared to a case in which a new profile image is generated.

Moreover, the encoder according to Example 29 may be the encoder according to Example 18, in which the at least one profile image is composed of one profile image, and the circuitry: derives, from the audio data, a first feature set indicating a mouth movement; and generates the person equivalent image through the neural network according to the first feature set and the one profile image.

Thus, it may be possible to derive, from audio data related to a mouth movement, the first feature set that accurately indicates the mouth movement. It may then be possible to cause the output person equivalent image to reflect the mouth movement. This may enable outputting a person equivalent image that accurately reflects the information expressed by the person.

Moreover, the encoder according to Example 30 may be the encoder according to Example 18 or 29, in which the at least one profile image is composed of one profile image, and the circuitry: derives, by simulating a head movement or an eye movement, a second feature set indicating the head movement or the eye movement; and generates the person equivalent image through the neural network according to the audio data, the second feature set, and the one profile image.

Thus, it may be possible to match the output person equivalent image to the simulated head movement or eye movement. This may enable outputting a person equivalent image that looks more natural and not odd.

Moreover, the encoder according to Example 31 may be the encoder according to any of Examples 18, 29, and 30, in which the circuitry matches a facial expression in the person equivalent image to a facial expression inferred from the audio data.

Thus, it may be possible to cause the output person equivalent image to reflect the facial expression corresponding to the audio data. This may enable outputting a person equivalent image that matches the facial expression of the person.

Moreover, the decoding method according to Example 32 is a decoding method including: decoding expression data indicating information expressed by a person; generating a person equivalent image through a neural network according to the expression data and at least one profile image of the person, the person equivalent image corresponding to the person; and outputting the person equivalent image.

Thus, it may be possible to cause the output person equivalent image to reflect the information expressed by the person. This may facilitate visually conveying the information expressed by the person, and therefore promote smooth communication. As a result, a waste of time and resources may be prevented.

Moreover, the encoding method according to Example 33 is an encoding method including: encoding expression data indicating information expressed by a person; generating a person equivalent image through a neural network according to the expression data and at least one profile image of the person, the person equivalent image corresponding to the person; and outputting the person equivalent image.

Thus, in a decoding environment corresponding to the encoding environment, it may be possible to cause the output person equivalent image to reflect the information expressed by the person. This may facilitate visually conveying the information expressed by the person, and therefore promote smooth communication. As a result, a waste of time and resources may be prevented. It may also be possible to output, for a checking purpose in the encoding environment, a person equivalent image expected to be outputted in the decoding environment corresponding to the encoding environment.

Furthermore, these general or specific aspects may be implemented using a system, an apparatus, a method, an integrated circuit, a computer program, or a non-transitory computer readable medium such as a CD-ROM, or any combination of systems, apparatuses, methods, integrated circuits, computer programs, or media.

### [Definitions of Terms]

The respective terms may be defined as indicated below as examples.

### (1) image

An image is a data unit configured with a set of pixels, is a picture or includes blocks smaller than a picture. Images include a still image in addition to a video.

### (2) picture

A picture is an image processing unit configured with a set of pixels, and is also referred to as a frame or a field.

### (3) block

A block is a processing unit which is a set of a particular number of pixels. The block is also referred to as indicated in the following examples. The shapes of blocks are not limited. Examples include a rectangle shape of M×N pixels and a square shape of M×M pixels for the first place, and also include a triangular shape, a circular shape, and other shapes.

### (examples of blocks)

- slice/tile/brick
- CTU / super block / basic splitting unit
- VPDU / processing splitting unit for hardware
- CU / processing block unit / prediction block unit (PU) / orthogonal transform block unit (TU) / unit
- sub-block

### (4) pixel/sample

A pixel or sample is a smallest point of an image. Pixels or samples include not only a pixel at an integer position but also a pixel at a sub-pixel position generated based on a pixel at an integer position.

### (5) pixel value / sample value

A pixel value or sample value is an eigen value of a pixel. Pixel or sample values naturally include a luma value, a chroma value, an RGB gradation level and also covers a depth value, or a binary value of 0 or 1.

### (6) flag

A flag indicates one or more bits, and may be, for example, a parameter or index represented by two or more bits. Alternatively, the flag may indicate not only a binary value represented by a binary number but also a multiple value represented by a number other than the binary number.

### (7) signal

A signal is the one symbolized or encoded to convey information. Signals include a discrete digital signal and an analog signal which takes a continuous value.

### (8) stream/bitstream

A stream or bitstream is a digital data string or a digital data flow. A stream or bitstream may be one stream or may be configured with a plurality of streams having a plurality of hierarchical layers. A stream or bitstream may be transmitted in serial communication using a single transmission path, or may be transmitted in packet communication using a plurality of transmission paths.

### (9) difference

In the case of scalar quantity, it is only necessary that a simple difference (x - y) and a difference calculation be included. Differences include an absolute value of a difference (|x - y|), a squared difference (x^2 - y^2), a square root of a difference (√(x - y)), a weighted difference (ax - by: a and b are constants), an offset difference (x - y + a: a is an offset).

### (10) sum

In the case of scalar quantity, it is only necessary that a simple sum (x + y) and a sum calculation be included. Sums include an absolute value of a sum (|x + y|), a squared sum (x^2 + y^2), a square root of a sum (√(x + y)), a weighted difference (ax + by: a and b are constants), an offset sum (x + y + a: a is an offset).

### (11) based on

A phrase "based on something" means that a thing other than the something may be considered. In addition, "based on" may be used in a case in which a direct result is obtained or a case in which a result is obtained through an intermediate result.

### (12) used, using

A phrase "something used" or "using something" means that a thing other than the something may be considered. In addition, "used" or "using" may be used in a case in which a direct result is obtained or a case in which a result is obtained through an intermediate result.

### (13) prohibit, forbid

The term "prohibit" or "forbid" can be rephrased as "does not permit" or "does not allow". In addition, "being not prohibited/forbidden" or "being permitted/allowed" does not always mean "obligation".

### (14) limit, restriction/restrict/restricted

The term "limit" or "restriction/restrict/restricted" can be rephrased as "does not permit/allow" or "being not permitted/allowed". In addition, "being not prohibited/forbidden" or "being permitted/allowed" does not always mean "obligation". Furthermore, it is only necessary that part of something be prohibited/forbidden quantitatively or qualitatively, and something may be fully prohibited/forbidden.

### (15) chroma

An adjective, represented by the symbols Cb and Cr, specifying that a sample array or single sample is representing one of the two color difference signals related to the primary colors. The term chroma may be used instead of the term chrominance.

### (16) luma

An adjective, represented by the symbol or subscript Y or L, specifying that a sample array or single sample is representing the monochrome signal related to the primary colors. The term luma may be used instead of the term luminance.

### [Notes Related to the Descriptions]

In the drawings, same reference numbers indicate same or similar components. The sizes and relative locations of components are not necessarily drawn by the same scale.

Hereinafter, embodiments will be described with reference to the drawings. Note that the embodiments described below each show a general or specific example. The numerical values, shapes, materials, components, the arrangement and connection of the components, steps, the relation and order of the steps, etc., indicated in the following embodiments are mere examples, and are not intended to limit the scope of the claims.

Embodiments of an encoder and a decoder will be described below. The embodiments are examples of an encoder and a decoder to which the processes and/or configurations presented in the description of aspects of the present disclosure are applicable. The processes and/or configurations can also be implemented in an encoder and a decoder different from those according to the embodiments. For example, regarding the processes and/or configurations as applied to the embodiments, any of the following may be implemented:
(1) Any of the components of the encoder or the decoder according to the embodiments presented in the description of aspects of the present disclosure may be substituted or combined with another component presented anywhere in the description of aspects of the present disclosure.
(2) In the encoder or the decoder according to the embodiments, discretionary changes may be made to functions or processes performed by one or more components of the encoder or the decoder, such as addition, substitution, removal, etc., of the functions or processes. For example, any function or process may be substituted or combined with another function or process presented anywhere in the description of aspects of the present disclosure.
(3) In methods implemented by the encoder or the decoder according to the embodiments, discretionary changes may be made such as addition, substitution, and removal of one or more of the processes included in the method. For example, any process in the method may be substituted or combined with another process presented anywhere in the description of aspects of the present disclosure.
(4) One or more components included in the encoder or the decoder according to embodiments may be combined with a component presented anywhere in the description of aspects of the present disclosure, may be combined with a component including one or more functions presented anywhere in the description of aspects of the present disclosure, and may be combined with a component that implements one or more processes implemented by a component presented in the description of aspects of the present disclosure.
(5) A component including one or more functions of the encoder or the decoder according to the embodiments, or a component that implements one or more processes of the encoder or the decoder according to the embodiments, may be combined or substituted with a component presented anywhere in the description of aspects of the present disclosure, with a component including one or more functions presented anywhere in the description of aspects of the present disclosure, or with a component that implements one or more processes presented anywhere in the description of aspects of the present disclosure.
(6) In methods implemented by the encoder or the decoder according to the embodiments, any of the processes included in the method may be substituted or combined with a process presented anywhere in the description of aspects of the present disclosure or with any corresponding or equivalent process.
(7) One or more processes included in methods implemented by the encoder or the decoder according to the embodiments may be combined with a process presented anywhere in the description of aspects of the present disclosure.
(8) The implementation of the processes and/or configurations presented in the description of aspects of the present disclosure is not limited to the encoder or the decoder according to the embodiments. For example, the processes and/or configurations may be implemented in a device used for a purpose different from the moving picture encoder or the moving picture decoder disclosed in the embodiments.

### [Aspect 1]

FIG. 1 is a conceptual diagram illustrating video teleconferencing system 300 according to the present aspect. In the present aspect, video teleconferencing system 300 includes encoder 100 and decoder 200. In video teleconferencing system 300, encoder 100 and decoder 200 perform real-time communication. For example, encoder 100 captures a video of a person and transmits the video to decoder 200. Decoder 200 then reconstructs the video of the person.

In reconstructing the video, a person may select to represent himself/herself using a profile image of the person instead of the video of the person. The profile image may be an avatar of the person, an illustration of the person, or a still image of the person, i.e., an actual image. It is to be noted that the profile image does not need to be in the shape of a human. The shape similar to an animal or the like is also possible.

Decoder 200 may include a neural network (NN). Decoder 200 then may recreate a facial expression included in the video of the person, using the NN.

Here, the facial expression refers to an appearance appearing on the person's face based on, for example, emotions in his/her mind, and corresponds to the emotions in his/her mind. Accordingly, the facial expression according to the present disclosure may be replaced with an emotion.

FIG. 2 is a conceptual diagram illustrating an example of replacing the video of the person with a profile image of the person. For example, the input video is replaced with a profile image, and thus the profile image is displayed on the output video.

Here, decoder 200 may input, into the neural network, a single profile image with a neutral facial expression. Here, the input video has a happy facial expression. However, it is difficult to recreate a video with the happy facial expression from the single profile image with the neutral facial expression. As the result, as shown in FIG. 2, the video with the neutral facial expression may be reconstructed.

### [Aspect 2]

FIG. 3 is a block diagram illustrating an exemplary configuration of video teleconferencing system 300 according to the present aspect. In the present aspect, video teleconferencing system 300 includes encoder 100 and decoder 200. Encoder 100 and decoder 200 are connected with each other via network 400. Video teleconferencing system 300 may further include network 400.

Encoder 100 encodes data to generate a bitstream. In this disclosure, "encoding data to generate a bitstream" may be expressed by "encoding data into a bitstream". Moreover, encoding data corresponds to data compression.

For example, encoder 100 receives a profile image and a video as an input video. Encoder 100 may receive multiple profile images or multiple images in the video. Encoder 100 encodes, into a bitstream, the relevant data obtained from the profile image and the video. Encoder 100 may generate multiple bitstreams. The bitstream generated in encoder 100 is transmitted from encoder 100 to decoder 200 via network 400.

Decoder 200 decodes a bitstream to generate data. In this disclosure, "decoding a bitstream to generate data" may be expressed by "decoding data from a bitstream". Moreover, decoding data corresponds to data decompression. For example, decoder 200 decodes the relevant data from the bitstream. Decoder 200 then generates and outputs a video from the relevant data.

FIG. 4 is a block diagram illustrating an exemplary configuration of encoder 100. In this example, encoder 100 includes data encoder 101, image selector 102, and image generator 103. Image generator 103 includes a neural network.

Data encoder 101 reads an input image included in the input video (an image to be inputted) to determine an index indicating the facial expression on the input image. This index is an index for selecting a profile image corresponding to the facial expression on the input image from among multiple profile images. Data encoder 101 then encodes this index into encoded data. The encoded data may be a single bitstream or multiple bitstreams.

Data encoder 101 may extract, from the input image, additional data for expressing a person, as well as the index indicating the facial expression, and encode the additional data into the encoded data. Data encoder 101 also may encode multiple profile images. For example, data encoder 101 performs entropy encoding in the encoding.

Image selector 102 selects one profile image from among multiple profile images based on the index determined by data encoder 101.

The multiple profile images may be read from memory internal or external to encoder 100. In other words, the multiple profile images are determined in advance regardless of the input video, and multiple profile images common to encoder 100 and decoder 200 may be stored in the memory.

Alternatively, the multiple profile images may be derived from the input video. In particular, at the initial state, multiple profile images may be extracted from the input video. Alternatively, the multiple profile images may be extracted from the input video at regular intervals. Alternatively, the multiple profile images may be derived by performing inter prediction using another reference.

It is to be noted that the profile image is an image including a face shape, and any form such as an avatar, an illustration, or a still image of a human or an animal is possible.

Image generator 103 generates an output image (an image to be outputted) through a neural network according to the selected profile image, and outputs the generated output image. The output image may be outputted by being displayed. In generating the output image, image generator 103 may use additional data extracted from the input image.

FIG. 5 is a conceptual diagram illustrating an example of determining an index for an input image through a facial-expression-recognition neural network. For example, an input image is inputted to the facial-expression-recognition neural network. As the result, an index indicating the facial expression included in the input image is outputted from the facial-expression-recognition neural network.

FIG. 6 is a block diagram illustrating an exemplary configuration of decoder 200. In this example, decoder 200 includes data decoder 201, image selector 202, and image generator 203. Image generator 203 includes a neural network.

Data decoder 201 decodes an index and multiple profile images from encoded data by, for example, performing entropy decoding on the encoded data. Image selector 202 selects one profile image from among the multiple profile images based on the index.

The encoded data may be a single bitstream or multiple bitstreams. In the case of multiple bitstreams, multiple profile images and an index may be each decoded from a different bitstream. Image generator 203 generates and outputs an output image using the one selected profile image. Image generator 203 may output the output image by displaying the output image.

The encoded data may include additional data relating to a face gesture, features, a facial expression, a head movement, or the like, as well as the index and the profile images. Image generator 203 then generates and outputs an output image using these additional data as well as the profile image.

FIG. 7 is a block diagram illustrating another exemplary configuration of decoder 200. In this example, multiple profile images are not encoded data, but obtained separately. For example, the multiple profile images are obtained from a memory. The memory for obtaining the multiple profile images may or may not be a constituent element of decoder 200. The multiple profile images may be obtained from a network different from the network for obtaining encoded data.

Alternatively, the multiple profile images may be derived by performing inter prediction using another reference.

For example, data decoder 201 decodes an index from encoded data. Image selector 202 reads multiple profile images from a memory. Image selector 202 then selects one profile image from among the multiple profile images based on the index. Alternatively, image selector 202 may read only a profile image corresponding to the index. Image generator 203 generates and outputs an output image using the one selected profile image. The output image may be displayed.

FIG. 8 is a flow chart illustrating an exemplary operation performed by encoder 100. First, data encoder 101 encodes an index into encoded data and outputs the encoded data including the index (S101). Based on the index, image selector 102 selects a profile image from among multiple profile images (S102). Image generator 103 generates an output image through a neural network according to the profile image (S103).

The encoded data may correspond to a bitstream. The index indicates one of the profile images. For example, different profile images correspond to different facial expressions, and the index indicates one of the profile images by indicating one of the facial expressions.

Specifically, data encoder 101 determines an index such that the facial expression in the profile image selected with the index matches the facial expression in the input image. That is, data encoder 101 determines an index that indicates, among the profile images, a profile image having a facial expression with the highest matching rate with respect to the facial expression in the input image.

The set of the profile images may be a set of images of a person each having a different facial expression. The index may be selected through a facial-expression-recognition neural network.

Alternatively, the set of the profile images may be a set of images of the person, a set of images of an avatar, a set of images of another person, or a set including any combination thereof.

For example, any one of the above sets may be selected through manual input. Then, from among the profile images in the selected set, a profile image may be selected through a neural network. That is, the index corresponding to the profile image may be selected through manual input and a neural network. In another example, if a single set is available rather than multiple sets, the index may be selected through a neural network but not through manual input.

The order of the steps may be changed. For example, encoding the index (S101) may be performed after selecting the profile image (S102) or after generating the output image (S103). Specifically, a profile image may be selected and then the index corresponding to the profile image selected may be encoded.

Items other than the index may be encoded. For example, the profile images may be encoded. Additional data, such as data on face gestures, features, facial expressions, or head movements, may be encoded separately from the index and the profile images.

The selection (S102) and the generation (S103) performed by encoder 100 may be similarly performed by decoder 200.

FIG. 9 is a flow chart illustrating an exemplary operation performed by decoder 200. First, data decoder 201 obtains encoded data including an index and decodes the index from the encoded data (S201). Based on the index, image selector 202 selects a profile image from among multiple profile images (S202). Image generator 203 generates an output image through a neural network according to the profile image (S203).

The profile image includes a face, and the output image also includes a face. The multiple profile images are different images indicating different facial expressions. The profile images may each include the face of the same person. The profile images may be decoded from the encoded data including the index. The profile images may also be decoded from encoded data different from the encoded data including the index. The profile images may also be read from memory internal or external to decoder 200.

Additional data for expressing the person may be decoded from the encoded data including the index, or from some other encoded data. The decoded additional data may be used in generating the output image (S203).

FIG. 10 is a conceptual diagram illustrating an example of the location of an index in a bitstream. The index may be included in each data region in the bitstream. The values of the index may be expressed as 0, 1, 2, 3, ..., A, B, C, ..., or I, II, III, ....

FIG. 11 is a conceptual diagram illustrating another example of the location of an index in a bitstream. The index may be included in a header region of the bitstream. That is, a common index may be used in the bitstream. The index may be switched as the bitstream is switched at predetermined time intervals.

Specifically, for example, the index may be switched for each randomly accessible unit. In this case, the index may be stored in a location such as the SPS (Sequence Parameter Set) or SEI in an image coding scheme such as H.265/HEVC or H.266/VVC. The index may also be stored in a location such as the PPS (Picture Parameter Set) if the index is switched for each image (picture).

The profile images may be included in the region that includes the index, or in a region different from the region that includes the index. The additional data to be extracted from the input image may be included in the region that includes the index, or in a region different from the region that includes the index.

FIG. 12 is a conceptual diagram illustrating an example of multiple profile images. As illustrated in FIG. 12, different profile images may show different head poses corresponding to face gestures. The head pose may be represented by yaw, pitch, and roll angles.

FIG. 13 is a conceptual diagram illustrating another example of multiple profile images. As illustrated in FIG. 13, different profile images may show different face features. Specifically, different profile images may show different features associated with the shapes of the tails of the eyes, the nose contour, the lip shape and width, the eyebrow length, the face contour, or any combination thereof.

FIG. 14 is a conceptual diagram illustrating yet another example of multiple profile images. As illustrated in FIG. 14, different profile images may show different facial expressions. The facial expressions may include happy, sad, angry, and neutral.

The profile images may be obtained by capturing the face of the same person at different times. The profile images may be obtained by capturing the face of the same person at different locations. The profile images may be obtained by capturing the face of the same person with different devices.

The encoded data includes, for example, data on face gestures, features, facial expressions, or head movements. The encoded data may include coordinates indicating head movements.

FIG. 15 is a conceptual diagram illustrating an example of data represented by coordinates. As illustrated in the example in FIG. 15, three-dimensional coordinates of yaw, pitch, and roll angles may be included in the encoded data as coordinates indicating a head pose corresponding to a head movement.

FIG. 16 is a conceptual diagram illustrating another example of data represented by coordinates. As illustrated in the example in FIG. 16, Cartesian coordinates may be included in the encoded data as coordinates indicating a position corresponding to a head movement.

FIG. 17 is a conceptual diagram illustrating an example of change in head pose. For example, a change in head pose is represented by the angles (yaw, pitch, roll) = (0, 0.71, 0). Data indicating such a change in head pose as three-dimensional coordinates may be included in the encoded data.

FIG. 18 is a conceptual diagram illustrating an example of change in lips. For example, a change in lips is represented by the angles (yaw, pitch, roll) = (0.34, -0.21, -0.91). Data indicating such a change in lips as three-dimensional coordinates may be included in the encoded data. The encoded data may also include data indicating any facial part movement, not limited to a lip movement, as three-dimensional coordinates. Examples of facial parts include eyes, eyelids, lips, eyebrows, and muscles of facial expression.

FIG. 19 is a conceptual diagram illustrating an example of a head movement. A head movement corresponds to a translational movement of the face. For example, as a head movement, the position of the head after the movement is represented by Cartesian coordinates (-40, -40, 0).

A combination of the above-described examples may be used. Further, the output image may have the same background as that of the profile image, or a background different from that of the profile image.

The profile images are, for example, different images each including the face of the same person. The profile images may be normalized.

FIG. 20 is a conceptual diagram illustrating an example of normalization. In this example, the backgrounds of the profile images are uniformed. Specifically, the profile images before normalization have different backgrounds, whereas the profile images after normalization have the same background.

For example, the backgrounds may be uniformed by eliminating the backgrounds of the profile images. The backgrounds may be uniformed by substituting the background of one profile image for the backgrounds of the rest of the profile images. The backgrounds may be uniformed by loading a background from the memory and inserting the loaded background into the profile images.

FIG. 21 is a conceptual diagram illustrating another example of normalization. In this example, the sizes of the faces in the profile images are uniformed. Specifically, the profile images before normalization have faces of different sizes, whereas the profile images after normalization have faces of the same size. For example, the faces in the profile images may be scaled to the same size.

FIG. 22 is a conceptual diagram illustrating yet another example of normalization. In this example, head poses in the profile images are unified. Specifically, the profile images before normalization have faces with different head poses, whereas the profile images after normalization have faces with the same head pose. For example, the faces in the profile images may be modified to have the same head pose.

Further, any two or more of the above-described normalization manners may be combined.

FIG. 23 is a conceptual diagram illustrating an example of generating an output image through a neural network according to encoded data and a profile image. The encoded data here includes data such as data on a face gesture, a feature, a facial expression, or a head movement. The encoded data may include data indicating a head movement as coordinates.

Specifically, for example, the profile image, as well as the data included in the encoded data, are inputted to the neural network. The data included in the encoded data may be inputted to the neural network before encoding or after decoding. The neural network outputs an output image. The data included in the encoded data may act on the profile image through the neural network to output an output image that includes a modified version of a facial expression in the profile image.

For example, the encoded data may include, for each input image, data on a face gesture, a feature, a facial expression, and a head movement. That is, these data items may be encoded for each input image.

Alternatively, these data items may be encoded for not all of the input images. In this case, data items unencoded for an input image may be generated by interpolation using the data items encoded for other input images. Alternatively, a reconstructed image of an input image having these data items unencoded may be generated by interpolation based on reconstructed images of input images having these data items encoded.

FIG. 24 is a conceptual diagram illustrating an example of indexing multiple profile images. In this example, index 0, index 1, index 2, and index 3 are associated with a sad face, a happy face, a neutral face, and a surprised face, respectively.

FIG. 25 is a conceptual diagram illustrating selection of a profile image and generation of an output image. In this example, as in the example in FIG. 24, indexes are associated with profile images. From among the profile images associated with indexes 0 to 3, the profile image associated with index 1 is selected. Further, the selected profile image and encoded data are inputted to a neural network. An output image is thus generated.

FIG. 26 is a conceptual diagram illustrating an example of a neural network for generating an output image. The neural network for generating an output image may be generative adversarial networks (GANs). GANs provide an intelligent solution to the modeling of data generation, an unsupervised learning problem, as a supervised one. A discriminator model learns to distinguish real data from fake data generated by a generator model. The two models are trained as they play a minimax game.

FIG. 27 is a conceptual diagram illustrating another example of the neural network for generating an output image. The neural network for generating an output image may be a variational autoencoder. A variational autoencoder compresses input information into a constrained multivariate latent distribution to reconstruct it as accurately as possible.

FIG. 28 is a conceptual diagram illustrating yet another example of the neural network for generating an output image. The neural network for generating an output image may be a flow-based generative model. A flow-based generative model is constructed by a sequence of invertible transformations. The model explicitly learns the data distribution F(X), and therefore the loss function is simply the negative log-likelihood.

The neural network for generating an output image may be a hybrid model corresponding to a combination of any two or more of the above-described three models. A neural network different from any of the above-described three models may also be used.

In the present aspect, a profile image corresponding to a video of a person is selected from among multiple profile images. An index indicating the profile image selected is signaled, so that the same profile image is selected in the decoding environment as well. The profile image selected and a neural network are used to generate an output image. The profile image selected is therefore reflected in the output image. This may help making the output image more closely resemble the video of the person.

Operations in the decoding environment may be performed in the encoding environment, and operations in the encoding environment may be performed in the decoding environment. Components in encoder 100 and components in decoder 200 may perform mutually corresponding operations. Not all of the components described in the present aspect are essential, and only some of the components in the present aspect may be implemented.

### [Aspect 3]

FIG. 29 is a conceptual diagram illustrating video teleconferencing system 300 according to the present aspect. In the present aspect, video teleconferencing system 300 includes encoder 100 and decoder 200. In video teleconferencing system 300, encoder 100 and decoder 200 perform real-time communication. For example, encoder 100 captures a video of a person and transmits the video to decoder 200. Decoder 200 then reconstructs the video of the person.

With respect to the reconstruction of the video, a person may select to represent himself/herself using a profile image of the person instead of the video of the person. The profile image may be an avatar of the person, an illustration of the person, or a still image of the person. In this case, audio data of the person may be used rather than a video of the person. For example, decoder 200 uses audio data of the person and a neural network (NN) to reconstruct a video that includes, e.g., a head movement of the person.

FIG. 30 is a block diagram illustrating an exemplary configuration of video teleconferencing system 300. In the present aspect, video teleconferencing system 300 includes encoder 100 and decoder 200. Encoder 100 and decoder 200 are connected with each other via network 400. Video teleconferencing system 300 may further include network 400.

Encoder 100 encodes data to generate a bitstream. In this disclosure, "encoding data to generate a bitstream" may be expressed as "encoding data into a bitstream." Encoding data corresponds to data compression.

For example, a profile image and audio data are inputted to encoder 100. Encoder 100 encodes the audio data into a bitstream. The bitstream generated in encoder 100 is transmitted from encoder 100 to decoder 200 via network 400.

Decoder 200 decodes a bitstream to generate data. In this disclosure, "decoding a bitstream to generate data" may be expressed as "decoding data from a bitstream." Decoding data corresponds to data decompression. For example, decoder 200 decodes audio data from a bitstream. Decoder 200 then generates a video from the audio data and outputs the video.

Encoder 100 may encode a profile image in addition to the audio data. Decoder 200 may decode a profile image in addition to the audio data. Decoder 200 may then generate a video from the audio data and the profile image and output the video. The video may be generated using a neural network.

FIG. 31 is a block diagram illustrating an exemplary configuration of encoder 100. In this example, encoder 100 includes data encoder 101 and image generator 103. Image generator 103 includes a neural network.

Data encoder 101 reads input audio data, encodes the input audio data into encoded data, and outputs the encoded data. For example, data encoder 101 performs entropy encoding in the encoding. The encoded data may be a single bitstream or multiple bitstreams. The encoded data may be included in a header of a bitstream.

The encoded data may include additional data for expressing a person. Data encoder 101 may extract a feature of the audio data from the audio data and encode the extracted feature as additional data into the encoded data. For example, data encoder 101 may derive text data from the audio data and encode the derived text data as additional data into the encoded data.

Data encoder 101 may read a video, extract a feature of the video, and encode the extracted feature as additional data into the encoded data. Data encoder 101 may encode a profile image into the encoded data.

Image generator 103 generates an output image through the neural network according to the audio data and the profile image, and outputs the generated output image. Image generator 103 may output the output image by displaying the output image. In generating the output image, image generator 103 may use the additional data to be encoded into the encoded data.

The profile image may be read from memory internal or external to encoder 100. The profile image may also be derived from an input video obtained by reading the input video. Specifically, at the initial stage, an input video may be read, from which a profile image may be extracted.

Image generator 103 may generate the output image in real time. Alternatively, image generator 103 may generate output images in advance. In this case, image generator 103 generates output image candidates in advance based on predefined audio data samples.

From among the predefined audio data samples, image generator 103 finds out an audio data sample corresponding to the input audio data. Then, from among the output image candidates generated in advance, image generator 103 outputs, as the output image, the output image candidate corresponding to the audio data sample found out.

FIG. 32 is a block diagram illustrating another exemplary configuration of encoder 100. In this example, encoder 100 includes audio deriver 104, data encoder 101, and image generator 103. In this example, encoder 100 reads input text data instead of input audio data.

Audio deriver 104 reads input text data and derives audio data from the input text data. In contrast to the example in FIG. 31, data encoder 101 and image generator 103 use, instead of input audio data, the audio data derived by audio deriver 104.

Data encoder 101 may encode the input text data instead of or in addition to the audio data. Image generator 103 may generate an output image using the audio data, the profile image, and the neural network, as well as the input text data.

In other respects, data encoder 101 and image generator 103 operate as in the example in FIG. 31.

FIG. 33 is a block diagram illustrating yet another exemplary configuration of encoder 100. In this example, encoder 100 includes data encoder 101, feature deriver 105, and image generator 103.

Feature deriver 105 reads input audio data and derives, from the input audio data, a first feature set indicating a mouth movement. Image generator 103 generates an output image through the neural network according to the first feature set and the profile image, and outputs the output image.

Image generator 103 may generate the output image in real time. Alternatively, image generator 103 may generate output images in advance. In this case, image generator 103 generates output image candidates in advance based on predefined first feature sets.

From among the predefined first feature sets, image generator 103 finds out a first feature set corresponding to the derived first feature set. Then, from among the output image candidates generated in advance, image generator 103 outputs, as the output image, the output image candidate corresponding to the first feature set found out.

Data encoder 101 may encode, instead of or in addition to the audio data, the first feature set derived from the audio data. Image generator 103 may generate the output image using the first feature set, the profile image, and the neural network, as well as the input audio data.

In other respects, data encoder 101 and image generator 103 operate as in the example in FIG. 31.

FIG. 34 is a block diagram illustrating yet another exemplary configuration of encoder 100. In this example, encoder 100 includes audio deriver 104, data encoder 101, feature deriver 105, and image generator 103. In this example, encoder 100 reads input text data instead of input audio data.

Audio deriver 104 reads input text data and derives audio data from the input text data. From the derived audio data, feature deriver 105 derives a first feature set indicating a mouth movement. That is, feature deriver 105 uses the derived audio data instead of input audio data.

In other respects, data encoder 101, feature deriver 105, and image generator 103 operate as in the example in FIG. 33. Audio deriver 104 operates as in the example in FIG. 32.

FIG. 35 is a block diagram illustrating yet another exemplary configuration of encoder 100. In this example, encoder 100 includes data encoder 101, simulator 106, and image generator 103.

Simulator 106 simulates a head movement or an eye movement to derive a second feature set indicating the head movement or the eye movement. The head movement or the eye movement here may correspond to not only the head movement or only the eye movement but also both the head movement and the eye movement. For example, simulator 106 simulates a natural movement of the head or eyes based on one or more general-purpose models. This reduces oddness that would be felt by seeing an output image in which the head or eyes remain unmoved.

Simulator 106 may read an input video and simulate a head movement or an eye movement based on the input video.

Image generator 103 generates an output image through the neural network according to the input audio data, the derived second feature set, and the profile image, and outputs the output image.

Image generator 103 may generate the output image in real time. Alternatively, image generator 103 may generate output images in advance. For example, image generator 103 generates output image candidates in advance based on predefined audio data samples and predefined second feature sets.

From among the predefined audio data samples and the predefined second feature sets, image generator 103 finds out an audio data sample and a second feature set corresponding to the input audio data and the derived second feature set. Then, from among the output image candidates generated in advance, image generator 103 outputs, as the output image, the output image candidate corresponding to the audio data sample and the second feature set found out.

Data encoder 101 may encode, in addition to the audio data, the second feature set derived by the simulation.

In other respects, data encoder 101 and image generator 103 operate as in the example in FIG. 31.

FIG. 36 is a block diagram illustrating yet another exemplary configuration of encoder 100. In this example, encoder 100 includes audio deriver 104, data encoder 101, simulator 106, and image generator 103. In this example, encoder 100 reads input text data instead of input audio data.

Audio deriver 104 reads input text data and derives audio data from the input text data. Image generator 103 generates an output image through the neural network according to the derived audio data, the derived second feature set, and the profile image, and outputs the output image. That is, image generator 103 uses the derived audio data instead of input audio data.

In other respects, data encoder 101, simulator 106, and image generator 103 operate as in the example in FIG. 35. Audio deriver 104 operates as in the example in FIG. 32.

FIG. 37 is a block diagram illustrating an exemplary configuration of decoder 200. In this example, decoder 200 includes data decoder 201 and image generator 203. Image generator 203 has a neural network.

Data decoder 201 decodes a profile image and audio data from encoded data, for example by entropy-decoding the encoded data. Data decoder 201 then outputs the audio data. Data decoder 201 may output the audio data as sound.

The encoded data may be a single bitstream or multiple bitstreams. For multiple bitstreams, the profile image and the audio data may be decoded from different bitstreams. The encoded data may be included in a header of a bitstream.

The profile image may be read from memory internal or external to decoder 200. In this case, the profile image need not be decoded from the encoded data.

The encoded data may include additional data for expressing a person. Data decoder 201 may decode the additional data from the encoded data.

Image generator 203 generates an output image through the neural network according to the decoded audio data and profile image, and outputs the output image. Image generator 203 may output the output image by displaying the output image. In generating the output image, image generator 203 may use the additional data decoded from the encoded data.

Image generator 203 may generate the output image in real time. Alternatively, image generator 203 may generate output images in advance. In this case, image generator 203 generates output image candidates in advance based on predefined audio data samples.

From among the predefined audio data samples, image generator 203 finds out an audio data sample corresponding to the decoded audio data. Then, from among the output image candidates generated in advance, image generator 203 outputs, as the output image, the output image candidate corresponding to the audio data sample found out.

FIG. 38 is a block diagram illustrating another exemplary configuration of decoder 200. In this example, decoder 200 includes data decoder 201, audio deriver 204, and image generator 203.

Data decoder 201 decodes a profile image and text data from encoded data, for example by entropy-decoding the encoded data. That is, in contrast to the example in FIG. 37, data decoder 201 decodes, from the encoded data, the text data instead of audio data. Data decoder 201 then outputs the text data. Data decoder 201 may output the text data by displaying the text data.

The encoded data may be a single bitstream or multiple bitstreams. For multiple bitstreams, the profile image and the text data may be decoded from different bitstreams.

Audio deriver 204 derives audio data from the text data. Audio deriver 204 then outputs the audio data. Audio deriver 204 may output the audio data as sound.

Image generator 203 generates an output image through the neural network according to the derived audio data and the profile image, and outputs the output image. That is, in contrast to the example in FIG. 37, image generator 203 generates the output image using the audio data derived from the text data, instead of audio data derived from encoded data.

In other respects, data decoder 201 and image generator 203 operate as in the example in FIG. 37.

FIG. 39 is a block diagram illustrating yet another exemplary configuration of decoder 200. In this example, decoder 200 includes data decoder 201, feature deriver 205, and image generator 203.

Feature deriver 205 derives, from decoded audio data, a first feature set indicating a mouth movement. Image generator 203 generates an output image through the neural network according to the first feature set and the profile image, and outputs the output image.

Image generator 203 may generate the output image in real time. Alternatively, image generator 203 may generate output images in advance. In this case, image generator 203 generates output image candidates in advance based on predefined first feature sets.

From among the predefined first feature sets, image generator 203 finds out a first feature set corresponding to the derived first feature set. Then, from among the output image candidates generated in advance, image generator 203 outputs, as the output image, the output image candidate corresponding to the first feature set found out.

Image generator 203 may generate the output image using the first feature set, the profile image, and the neural network, as well as the decoded audio data.

In other respects, data decoder 201 and image generator 203 operate as in the example in FIG. 37.

FIG. 40 is a block diagram illustrating yet another exemplary configuration of decoder 200. In this example, decoder 200 includes data decoder 201, audio deriver 204, feature deriver 205, and image generator 203.

Data decoder 201 decodes a profile image and text data from encoded data, for example by entropy-decoding the encoded data. That is, in contrast to the example in FIG. 39, data decoder 201 decodes, from the encoded data, the text data instead of audio data.

Audio deriver 204 derives audio data from the decoded text data. From the derived audio data, feature deriver 205 derives a first feature set indicating a mouth movement. That is, in contrast to the example in FIG. 39, feature deriver 205 derives the first feature set using the audio data derived from the text data, instead of using audio data decoded from encoded data.

In other respects, data decoder 201, feature deriver 205, and image generator 203 operate as in the example in FIG. 39. Audio deriver 204 operates as in the example in FIG. 38.

FIG. 41 is a block diagram illustrating yet another exemplary configuration of decoder 200. In this example, decoder 200 includes data decoder 201, simulator 206, and image generator 203.

Simulator 206 simulates a head movement or an eye movement to derive a second feature set indicating the head movement or the eye movement. The head movement or the eye movement here may correspond to not only the head movement or only the eye movement but also both the head movement and the eye movement. For example, simulator 206 simulates a natural movement of the head or eyes based on one or more general-purpose models. This reduces oddness that would be felt by seeing an output image in which the head or eyes remain unmoved.

Simulator 206 may simulate the head movement or the eye movement based on the additional data decoded from the encoded data.

Image generator 203 generates an output image through the neural network according to the decoded audio data, the derived second feature set, and the profile image, and outputs the output image. Image generator 203 may generate the output image in real time. Alternatively, image generator 203 may generate output images in advance. For example, image generator 203 generates output image candidates in advance based on predefined audio data samples and predefined second feature sets.

From among the predefined audio data samples and the predefined second feature sets, image generator 203 finds out an audio data sample and a second feature set corresponding to the decoded audio data and the derived second feature set. Then, from among the output image candidates generated in advance, image generator 203 outputs, as the output image, the output image candidate corresponding to the audio data sample and the second feature set found out.

In other respects, data decoder 201 and image generator 203 operate as in the example in FIG. 37.

FIG. 42 is a block diagram illustrating yet another exemplary configuration of decoder 200. In this example, decoder 200 includes data decoder 201, audio deriver 204, simulator 206, and image generator 203.

Data decoder 201 decodes a profile image and text data from encoded data, for example by entropy-decoding the encoded data. That is, in contrast to the example in FIG. 41, data decoder 201 decodes, from the encoded data, the text data instead of audio data.

Audio deriver 204 derives audio data from the decoded text data. Image generator 203 generates an output image through the neural network according to the derived audio data, the derived second feature set, and the profile image, and outputs the output image. That is, in contrast to the example in FIG. 41, image generator 203 uses the audio data derived from the text data, instead of audio data decoded from encoded data.

In other respects, data decoder 201, simulator 206, and image generator 203 operate as in the example in FIG. 41. Audio deriver 204 operates as in the example in FIG. 38.

FIG. 43 is a flow chart illustrating an exemplary operation performed by encoder 100. First, data encoder 101 encodes audio data into encoded data (S301). The encoded data may correspond to a bitstream. In encoding the audio data, data encoder 101 may use an AAC codec to compress the audio data. Data encoder 101 may encode a feature amount for generating an output image into the encoded data.

The encoded data may be a single bitstream or multiple bitstreams. The encoded data may be included in a header of a bitstream.

Image generator 103 generates an output image through a neural network according to the audio data and a profile image (S302). The output image is an image corresponding to a person. For example, the output image shows at least the head of the person, including the person's face. A first feature set indicating a mouth movement may be derived from the audio data. Image generator 103 may then generate the output image through the neural network according to the first feature set and the profile image.

For example, the first feature set may be derived by applying a model, such as a speech recognition model, an acoustic model, a natural language model, or a word lattice, to the audio data and performing computation for a spectral envelope, pitch, voice, transient detection, phoneme classification, or speech.

The first feature set may be represented by coordinates for changing the orientation, position, shape, or size of the mouth. The first feature set may be represented by three-dimensional coordinates as in FIG. 15. The first feature set may be represented by Cartesian coordinates as in FIG. 16.

FIG. 44 is a conceptual diagram illustrating an example of a mouth movement corresponding to a different audio data feature. For example, derived from high-pitch audio data is a first feature set indicating a mouth movement represented by the angles (yaw, pitch, roll) = (0.34, -0.51, 0.91). Derived from low-pitch audio data is a first feature set indicating a mouth movement represented by the angles (yaw, pitch, roll) = (0.34, -0.21, 0.91).

The image may also be generated through the neural network according to the first feature set indicating a mouth movement and a second feature set indicating a head movement or an eye movement. The first feature set indicating a mouth movement is derived from the audio data, and the second feature set indicating a head movement or an eye movement is derived by simulating a head movement or an eye movement.

FIG. 45 is a conceptual diagram illustrating an example of a head movement. This example corresponds to an example of the second feature set. In this example, the head movement corresponds to the head pose.

At time T = 1, the head pose corresponds to facing straight, and the second feature set is represented by the angles (yaw, pitch, roll) = (0, 0, 0). At time T = 2, the head pose corresponds to moving right, and the second feature set is represented by the angles (yaw, pitch, roll) = (0, 0.23, 0). At time T = 3, the head pose corresponds to moving left, and the second feature set is represented by the angles (yaw, pitch, roll) = (0, -0.23, 0).

FIG. 46 is a conceptual diagram illustrating an example of an eye movement. This example corresponds to another example of the second feature set. In this example, the eye movement corresponds to the eyelid movement.

At time T = 1, the eyelids are closed, and the second feature set is represented by the angles (yaw, pitch, roll) = (0, 0, 0). At time T = 2, the eyelids are slightly open, and the second feature set is represented by the angles (yaw, pitch, roll) = (0, 0.15, 0). At time T = 3, the eyelids are wide open, and the second feature set is represented by the angles (yaw, pitch, roll) = (0, 0.35, 0).

FIG. 47 is a conceptual diagram illustrating another example of an eye movement. This example corresponds to another example of the second feature set. In this example, the eye movement corresponds to the eyeball direction.

At time T = 1, the eyeball direction corresponds to looking straight, and the second feature set is represented by the angles (yaw, pitch, roll) = (0, 0, 0). At time T = 2, the eyeball direction corresponds to looking right, and the second feature set is represented by the angles (yaw, pitch, roll) = (0, 0.56, 0). At time T = 3, the eyeball direction corresponds to looking left, and the second feature set is represented by the angles (yaw, pitch, roll) = (0, -0.56, 0).

The second feature set may be a combination of the above examples. According to the audio data and one or more of such second feature sets, the output image may be generated through the neural network.

The output image may be generated in real time through the neural network. Alternatively, output image candidates may be generated in advance through the neural network according to predetermined audio data samples. Then, the output image candidate corresponding to the audio data being processed may be selected as the output image.

Alternatively, output image candidates may be generated in advance through the neural network according to predetermined first feature sets. Then, the output image candidate corresponding to the first feature set for the audio data being processed may be selected as the output image.

Alternatively, output image candidates may be generated in advance through the neural network according to predetermined audio data samples and predetermined second feature sets. Then, the output image candidate corresponding to the audio data being processed and to a second feature set resulting from simulation may be selected as the output image.

For example, image generator 103 may estimate a facial expression from the audio data. Specifically, image generator 103 may analyze the frequency and amplitude of the audio data. The frequency here indicates the height (pitch) of sound, and the amplitude here indicates the volume (loudness) of sound. Based on the result of analyzing the audio data, image generator 103 may further estimate an intonation and a word meaning to identify a facial expression. Image generator 103 may also estimate a facial expression through the neural network according to the audio data.

Image generator 103 may then generate an output image such that the facial expression of the person in the output image matches the facial expression estimated from the audio data. That is, image generator 103 may generate, through the neural network, an output image that matches the actual facial expression.

Now, words spoken by a person might not always match the emotion in the person's mind. Image generator 103 may use nonverbal information included in the audio data to generate an output image that matches the actual emotion more closely than an output image that would be generated without using nonverbal information.

The neural network may be provided for each of different languages. This may facilitate neural network learning specialized for each language. The neural network may be provided for each of different language-country combinations. This may facilitate neural network learning specialized for each language and each culture.

FIG. 48 is a flow chart illustrating another exemplary operation performed by encoder 100. First, data encoder 101 encodes text data into encoded data (S401). The encoded data may correspond to a bitstream. In encoding the text data, data encoder 101 may compress the text data. Data encoder 101 may encode a feature amount for generating an output image into the encoded data.

The encoded data may be a single bitstream or multiple bitstreams. The encoded data may be included in a header of a bitstream.

Audio deriver 104 derives audio data from the text data (S402). Data encoder 101 may encode the derived audio data. If the text data is not used for generating an output image, data encoder 101 need not encode the text data.

Image generator 103 generates an output image through a neural network according to the audio data and a profile image (S403). The output image is an image corresponding to a person. For example, the output image shows at least the head of the person, including the person's face.

The text data may be, for example, translated data. In the present aspect, the neural network receives input of the audio data resulting from converting the text data. Thus, irrespective of whether the original data is text data or audio data, audio data can be inputted to the neural network to facilitate learning.

However, audio data resulting from converting text data may lack nonverbal information (e.g., intonations). For this reason, in an environment that accepts text data, text data not converted into audio data may be used for the neural network. The neural network in an environment that accepts text data may be different from the neural network in an environment that does not accept text data.

In this case, encoder 100 may encode the text data into encoded data and generate an output image that shows at least the head of the person, including the person's face, through the neural network according to the text data.

The neural network for generating the output image may be generative adversarial networks (GANs) as illustrated in FIG. 26, a variational autoencoder as illustrated in FIG. 27, or a flow-based generative model as illustrated in FIG. 28.

The neural network may also be a combination of any two or more of the above three models. A neural network different from any of the above three models may also be used.

In the present aspect, an output image is generated through a neural network according to audio data and a profile image. Characteristics of the audio data is therefore reflected in the output image. Thus, it may be possible to cause the output image to reflect information expressed by a person. This may facilitate visually conveying the information expressed by the person, and therefore promote smooth communication.

Instead of the audio data, text data may be inputted by the person. In this case, similar operations can still be performed by converting the text data into audio data.

Operations in the decoding environment may be performed in the encoding environment, and operations in the encoding environment may be performed in the decoding environment. Components in encoder 100 and components in decoder 200 may perform mutually corresponding operations. Not all of the components described in the present aspect are essential, and only some of the components in the present aspect may be implemented.

### [Exemplary Implementations]

FIG. 49 is a block diagram illustrating an exemplary implementation of encoder 100. Encoder 100 includes circuit 151 and memory 152. For example, the above-described components of encoder 100 are implemented by circuit 151 and memory 152.

Circuit 151, which is an electric circuit that performs information processing, can access memory 152. For example, circuit 151 may be a special-purpose circuit for performing the encoding method in the present disclosure, or may be a general-purpose circuit that executes a program corresponding to the encoding method in the present disclosure. Circuit 151 may be a processor such as a CPU. Circuit 151 may further be an aggregation of circuits.

Memory 152 is a special-purpose or a general-purpose memory that stores information used by circuit 151 to encode images. Memory 152 may be an electric circuit and may be connected to circuit 151. Memory 152 may be included in circuit 151. Memory 152 may be an aggregation of circuits. Memory 152 may be a magnetic disk or an optical disc, and may be referred to as storage or a recording medium. Memory 152 may be a nonvolatile memory or a volatile memory.

For example, memory 152 may store to-be-encoded data such as images, and encoded data such as bitstreams. Memory 152 may store programs for causing circuit 151 to perform image processing. Memory 152 may store a neural network for causing circuit 151 to perform inference processing. Memory 152 may store profile images.

FIG. 50 is a flow chart illustrating an exemplary basic operation performed by encoder 100. Specifically, in operation, circuit 151 in encoder 100 operates as follows.

Circuit 151 encodes expression data indicating information expressed by a person (S501). Circuit 151 generates a person equivalent image corresponding to the person through a neural network according to the expression data and at least one profile image of the person (S502). Circuit 151 outputs the person equivalent image (S503).

Thus, in a decoding environment corresponding to the encoding environment, it may be possible to cause the output person equivalent image to reflect the information expressed by the person. This may facilitate visually conveying the information expressed by the person, and therefore promote smooth communication. As a result, a waste of time and resources may be prevented. It may also be possible to output, for a checking purpose in the encoding environment, a person equivalent image expected to be outputted in the decoding environment corresponding to the encoding environment.

For example, the expression data may include data originated from a video of the person. Thus, it may be possible to cause the output person equivalent image to reflect the data originated from the video of the person. This may enable outputting a person equivalent image that matches the video of the person.

For example, the expression data may include audio data of the person. Thus, it may be possible to cause the output person equivalent image to reflect the audio data of the person. This may enable outputting a person equivalent image that matches the audio data of the person.

For example, the at least one profile image may comprise a plurality of profile images. Circuit 151 may select one profile image from among the plurality of profile images according to the expression data. Circuit 151 may generate the person equivalent image through the neural network according to the one profile image.

Thus, it may be possible to select, from among the profile images, a profile image corresponding to the information expressed by the person. It may then be possible to generate, from the profile image corresponding to the information expressed by the person, the output person equivalent image. This may enable outputting a person equivalent image that matches the information expressed by the person.

For example, the expression data may include an index indicating a facial expression of the person. The plurality of profile images may correspond to a plurality of facial expressions of the person. Thus, it may be possible to cause the output person equivalent image to reflect the facial expression of the person. This may enable outputting a person equivalent image that matches the facial expression of the person. It may also be possible to reduce the code amount because the index is considered to have a small code amount.

For example, circuit 151 may derive the index through a facial-expression-recognition neural network according to the video of the person. Thus, it is possible to derive an index corresponding to a facial expression recognized accurately from the video of the person. This may enable causing the output person equivalent image to accurately reflect the facial expression of the person.

For example, circuit 151 may encode the expression data into each of data regions in a bitstream. Thus, it may be possible to cause the output person equivalent image to reflect any of different states for different data regions in the bitstream. This may enable causing the person equivalent image to reflect the person's timely state.

For example, circuit 151 may encode the expression data into a header region of a bitstream. Thus, it may be possible to cause the output person equivalent image to reflect a fixed state in the bitstream. It may then be possible to reduce the code amount.

For example, the expression data may include data indicating at least one of a facial expression, a head pose, a facial part movement, and a head movement. Thus, it may be possible to cause the output person equivalent image to reflect an expression, such as the facial expression of the person. This may enable outputting a person equivalent image that matches an expression, such as the facial expression of the person.

For example, the expression data may include data represented by coordinates. Thus, it may be possible to precisely represent a spatial position related to the expression data. This may enable causing the output person equivalent image to more precisely reflect the information expressed by the person.

For example, circuit 151 may encode the at least one profile image.

Thus, in the decoding environment corresponding to the encoding environment, it may be possible to use a profile image not stored in memory 152. This may enable reducing the memory capacity in the decoding environment. It may also be possible to use, in decoding, a profile image designated in encoding. This may enable consistent encoding and decoding operations.

For example, circuit 151 may encode the expression data into a first bitstream. Circuit 151 may encode the at least one profile image into a second bitstream different from the first bitstream. Thus, it may be possible to manage the expression data and the profile image separately from each other. It may then be possible to efficiently update each of the expression data and the profile image.

For example, circuit 151 may read the at least one profile image from memory 152. Thus, it may be possible to reduce the processing amount compared to a case in which a new profile image is generated.

For example, the at least one profile image may comprise one profile image. Circuit 151 may derive, from the audio data, a first feature set indicating a mouth movement. Circuit 151 may generate the person equivalent image through the neural network according to the first feature set and the one profile image.

Thus, it may be possible to derive, from audio data related to a mouth movement, the first feature set that accurately indicates the mouth movement. It may then be possible to cause the output person equivalent image to reflect the mouth movement. This may enable outputting a person equivalent image that accurately reflects the information expressed by the person.

For example, the at least one profile image may comprise one profile image. Circuit 151 may derive, by simulating a head movement or an eye movement, a second feature set indicating the head movement or the eye movement. Circuit 151 may generate the person equivalent image through the neural network according to the audio data, the second feature set, and the one profile image.

Thus, it may be possible to match the output person equivalent image to the simulated head movement or eye movement. This may enable outputting a person equivalent image that looks more natural and not odd.

For example, circuit 151 may match a facial expression in the person equivalent image to a facial expression inferred from the audio data. Thus, it may be possible to cause the output person equivalent image to reflect the facial expression corresponding to the audio data. This may enable outputting a person equivalent image that matches the facial expression of the person.

Alternatively, encoder 100 may include an input terminal, an entropy encoder, and an output terminal. The operations performed by circuit 151 may be performed by the entropy encoder. The input terminal may receive input of data for use in the operations performed by the entropy encoder. The output terminal may output data resulting from the operations performed by the entropy encoder.

FIG. 51 is a block diagram illustrating an exemplary implementation of decoder 200. Decoder 200 includes circuit 251 and memory 252. For example, the above-described components of decoder 200 are implemented by circuit 251 and memory 252.

Circuit 251, which is an electric circuit that performs information processing, can access memory 252. For example, circuit 251 may be a special-purpose circuit for performing the decoding method in the present disclosure, or may be a general-purpose circuit that executes a program corresponding to the decoding method in the present disclosure. Circuit 251 may be a processor such as a CPU. Circuit 251 may further be an aggregation of circuits.

Memory 252 is a special-purpose or a general-purpose memory that stores information used by circuit 251 to decode images. Memory 252 may be an electric circuit and may be connected to circuit 251. Memory 252 may be included in circuit 251. Memory 252 may be an aggregation of circuits. Memory 252 may be a magnetic disk or an optical disc, and may be referred to as storage or a recording medium. Memory 252 may be a nonvolatile memory or a volatile memory.

For example, memory 252 may store to-be-decoded data such as bitstreams, and decoded data such as images. Memory 252 may store programs for causing circuit 251 to perform image processing. Memory 252 may store a neural network for causing circuit 251 to perform inference processing. Memory 252 may store profile images.

FIG. 52 is a flow chart illustrating an exemplary basic operation performed by decoder 200. Specifically, in operation, circuit 251 in decoder 200 operates as follows.

Circuit 251 decodes expression data indicating information expressed by a person (S601). Circuit 251 generates a person equivalent image corresponding to the person through a neural network according to the expression data and at least one profile image of the person (S602). Circuit 251 outputs the person equivalent image (S603).

Thus, it may be possible to cause the output person equivalent image to reflect the information expressed by the person. This may facilitate visually conveying the information expressed by the person, and therefore promote smooth communication. As a result, a waste of time and resources may be prevented.

For example, the expression data may include data originated from a video of the person. Thus, it may be possible to cause the output person equivalent image to reflect the data originated from the video of the person. This may enable outputting a person equivalent image that matches the video of the person.

For example, the expression data may include audio data of the person. Thus, it may be possible to cause the output person equivalent image to reflect the audio data of the person. This may enable outputting a person equivalent image that matches the audio data of the person.

For example, the at least one profile image may comprise a plurality of profile images. Circuit 251 may select one profile image from among the plurality of profile images according to the expression data. Circuit 251 may generate the person equivalent image through the neural network according to the one profile image.

Thus, it may be possible to select, from among the profile images, a profile image corresponding to the information expressed by the person. It may then be possible to generate, from the profile image corresponding to the information expressed by the person, the output person equivalent image. This may enable outputting a person equivalent image that matches the information expressed by the person.

For example, the expression data may include an index indicating a facial expression of the person. The plurality of profile images may correspond to a plurality of facial expressions of the person. Thus, it may be possible to cause the output person equivalent image to reflect the facial expression of the person. This may enable outputting a person equivalent image that matches the facial expression of the person. It may also be possible to reduce the code amount because the index is considered to have a small code amount.

For example, circuit 251 may decode the expression data from each of data regions in a bitstream. Thus, it may be possible to cause the output person equivalent image to reflect any of different states for different data regions in the bitstream. This may enable causing the person equivalent image to reflect the person's timely state.

For example, circuit 251 may decode the expression data from a header region of a bitstream. Thus, it may be possible to cause the output person equivalent image to reflect a fixed state in the bitstream. It may then be possible to reduce the code amount.

For example, the expression data may include data indicating at least one of a facial expression, a head pose, a facial part movement, and a head movement. Thus, it may be possible to cause the output person equivalent image to reflect an expression, such as the facial expression of the person. This may enable outputting a person equivalent image that matches an expression, such as the facial expression of the person.

For example, the expression data may include data represented by coordinates. Thus, it may be possible to precisely represent a spatial position related to the expression data. This may enable causing the output person equivalent image to more precisely reflect the information expressed by the person.

For example, circuit 251 may decode the at least one profile image.

Thus, it may be possible to use a profile image not stored in memory 252. This may enable reducing the memory capacity. It may also be possible to use, in decoding, a profile image designated in encoding. This may enable consistent encoding and decoding operations.

For example, circuit 251 may decode the expression data from a first bitstream. Circuit 251 may decode the at least one profile image from a second bitstream different from the first bitstream. Thus, it may be possible to manage the expression data and the profile image separately from each other. It may then be possible to efficiently update each of the expression data and the profile image.

For example, circuit 251 may read the at least one profile image from memory 252.

Thus, it may be possible to skip decoding the profile image. This may enable reducing the processing amount and the code amount.

For example, the at least one profile image may comprise one profile image. Circuit 251 may derive, from the audio data, a first feature set indicating a mouth movement. Circuit 251 may generate the person equivalent image through the neural network according to the first feature set and the one profile image.

Thus, it may be possible to derive, from audio data related to a mouth movement, the first feature set that accurately indicates the mouth movement. It may then be possible to cause the output person equivalent image to reflect the mouth movement. This may enable outputting a person equivalent image that accurately reflects the information expressed by the person.

For example, the at least one profile image may comprise one profile image. Circuit 251 may derive, by simulating a head movement or an eye movement, a second feature set indicating the head movement or the eye movement. Circuit 251 may generate the person equivalent image through the neural network according to the audio data, the second feature set, and the one profile image.

Thus, it may be possible to match the output person equivalent image to the simulated head movement or eye movement. This may enable outputting a person equivalent image that looks more natural and not odd.

For example, circuit 251 may match a facial expression in the person equivalent image to a facial expression inferred from the audio data. Thus, it may be possible to cause the output person equivalent image to reflect the facial expression corresponding to the audio data. This may enable outputting a person equivalent image that matches the facial expression of the person.

Alternatively, decoder 200 may include an input terminal, an entropy decoder, and an output terminal. The operations performed by circuit 251 may be performed by the entropy decoder. The input terminal may receive input of data for use in the operations performed by the entropy decoder. The output terminal may output data resulting from the operations performed by the entropy decoder.

### [Other Examples]

Encoder 100 and decoder 200 in each of the above-described examples may be used as an image encoder and an image decoder, respectively, or may be used as a video encoder and a video decoder, respectively. Moreover, the constituent elements included in encoder 100 and the constituent elements included in decoder 200 may perform operations corresponding to each other.

Moreover, the term "encode" may be replaced with another term such as store, include, write, describe, signal, send out, notice, or hold, and these terms are interchangeable. For example, encoding information may be including information in a bitstream. Moreover, encoding information into a bitstream may mean that information is encoded to generate a bitstream including the encoded information.

Moreover, the term "decode" may be replaced with another term such as retrieve, parse, read, load, derive, obtain, receive, extract, or restore, and these terms are interchangeable. For example, decoding information may be obtaining information from a bitstream. Moreover, decoding information from a bitstream may mean that a bitstream is decoded to obtain information included in the bitstream.

In addition, at least a part of each example described above may be used as an encoding method or a decoding method, may be used as an entropy encoding method or an entropy decoding method, or may be used as another method.

In addition, each constituent element may be configured with dedicated hardware, or may be implemented by executing a software program suitable for the constituent element. Each component may be implemented by causing a program executer such as a CPU or a processor to read out and execute a software program stored on a medium such as a hard disk or a semiconductor memory.

More specifically, each of encoder 100 and decoder 200 may include processing circuitry and storage which is electrically connected to the processing circuitry and is accessible from the processing circuitry. For example, the processing circuitry corresponds to circuit 151 or 251, and the storage corresponds to memory 152 or 252.

The processing circuitry includes at least one of a dedicated hardware and a program executer, and performs processing using the storage. Moreover, when the processing circuitry includes the program executer, the storage stores a software program to be executed by the program executer.

An example of the software program described above is a bitstream. The bitstream includes an encoded image and syntaxes for performing a decoding process that decodes an image. The bitstream causes decoder 200 to execute the process according to the syntaxes, and thereby causes decoder 200 to decode an image. Moreover, for example, the software which implements encoder 100, decoder 200, or the like described above is a program indicated below.

For example, this program may cause a computer to execute an encoding method including: encoding expression data indicating information expressed by a person; generating a person equivalent image through a neural network according to the expression data and at least one profile image of the person, the person equivalent image corresponding to the person; and outputting the person equivalent image.

Moreover, for example, this program may cause a computer to execute a decoding method including: decoding expression data indicating information expressed by a person; generating a person equivalent image through a neural network according to the expression data and at least one profile image of the person, the person equivalent image corresponding to the person; and outputting the person equivalent image.

Moreover, each constituent element as described above may be a circuit. The circuits may compose circuitry as a whole, or may be separate circuits. Alternatively, each constituent element may be implemented as a general processor, or may be implemented as a dedicated processor.

Moreover, the process that is executed by a particular constituent element may be executed by another constituent element. Moreover, the processing execution order may be modified, or a plurality of processes may be executed in parallel. Moreover, any two or more of the examples of the present disclosure may be performed by being combined appropriately. Moreover, an encoding and decoding device may include encoder 100 and decoder 200.

In addition, the ordinal numbers such as "first" and "second" used for explanation may be changed appropriately. Moreover, the ordinal number may be newly assigned to a component, etc., or may be deleted from a component, etc. Moreover, the ordinal numbers may be assigned to components to differentiate between the components, and may not correspond to the meaningful order.

Although aspects of encoder 100 and decoder 200 have been described based on a plurality of examples, aspects of encoder 100 and decoder 200 are not limited to these examples. The scope of the aspects of encoder 100 and decoder 200 may encompass embodiments obtainable by adding, to any of these embodiments, various kinds of modifications that a person skilled in the art would conceive and embodiments configurable by combining constituent elements in different embodiments, without deviating from the scope of the present disclosure.

The present aspect may be performed by combining one or more aspects disclosed herein with at least part of other aspects according to the present disclosure. In addition, the present aspect may be performed by combining, with the other aspects, part of the processes indicated in any of the flow charts according to the aspects, part of the configuration of any of the devices, part of syntaxes, etc.

### [Implementations and Applications]

As described in each of the above embodiments, each functional or operational block may typically be realized as an MPU (micro processing unit) and memory, for example. Moreover, processes performed by each of the functional blocks may be realized as a program execution unit, such as a processor which reads and executes software (a program) recorded on a medium such as ROM. The software may be distributed. The software may be recorded on a variety of media such as semiconductor memory. Note that each functional block can also be realized as hardware (dedicated circuit).

The processing described in each of the embodiments may be realized via integrated processing using a single apparatus (system), and, alternatively, may be realized via decentralized processing using a plurality of apparatuses. Moreover, the processor that executes the above-described program may be a single processor or a plurality of processors. In other words, integrated processing may be performed, and, alternatively, decentralized processing may be performed.

Embodiments of the present disclosure are not limited to the above exemplary embodiments; various modifications may be made to the exemplary embodiments, the results of which are also included within the scope of the embodiments of the present disclosure.

Next, application examples of the moving picture encoding method (image encoding method) and the moving picture decoding method (image decoding method) described in each of the above embodiments will be described, as well as various systems that implement the application examples. Such a system may be characterized as including an image encoder that employs the image encoding method, an image decoder that employs the image decoding method, or an image encoder-decoder that includes both the image encoder and the image decoder. Other configurations of such a system may be modified on a case-by-case basis.

### [Usage Examples]

FIG. 53 illustrates an overall configuration of content providing system ex100 suitable for implementing a content distribution service. The area in which the communication service is provided is divided into cells of desired sizes, and base stations ex106, ex107, ex108, ex109, and ex110, which are fixed wireless stations in the illustrated example, are located in respective cells.

In content providing system ex100, devices including computer ex111, gaming device ex112, camera ex113, home appliance ex114, and smartphone ex115 are connected to internet ex101 via internet service provider ex102 or communications network ex104 and base stations ex106 through ex110. Content providing system ex100 may combine and connect any of the above devices. In various implementations, the devices may be directly or indirectly connected together via a telephone network or near field communication, rather than via base stations ex106 through ex110. Further, streaming server ex103 may be connected to devices including computer ex111, gaming device ex112, camera ex113, home appliance ex114, and smartphone ex115 via, for example, internet ex101. Streaming server ex103 may also be connected to, for example, a terminal in a hotspot in airplane ex117 via satellite ex116.

Note that instead of base stations ex106 through ex110, wireless access points or hotspots may be used. Streaming server ex103 may be connected to communications network ex104 directly instead of via internet ex101 or internet service provider ex102, and may be connected to airplane ex117 directly instead of via satellite ex116.

Camera ex113 is a device capable of capturing still images and video, such as a digital camera. Smartphone ex115 is a smartphone device, cellular phone, or personal handyphone system (PHS) phone that can operate under the mobile communications system standards of the 2G, 3G, 3.9G, and 4G systems, as well as the next-generation 5G system.

Home appliance ex114 is, for example, a refrigerator or a device included in a home fuel cell cogeneration system.

In content providing system ex100, a terminal including an image and/or video capturing function is capable of, for example, live streaming by connecting to streaming server ex103 via, for example, base station ex106. When live streaming, a terminal (e.g., computer ex111, gaming device ex112, camera ex113, home appliance ex114, smartphone ex115, or a terminal in airplane ex117) may perform the encoding processing described in the above embodiments on still-image or video content captured by a user via the terminal, may multiplex video data obtained via the encoding and audio data obtained by encoding audio corresponding to the video, and may transmit the obtained data to streaming server ex103. In other words, the terminal functions as the image encoder according to one aspect of the present disclosure.

Streaming server ex103 streams transmitted content data to clients that request the stream. Client examples include computer ex111, gaming device ex112, camera ex113, home appliance ex114, smartphone ex115, and terminals inside airplane ex117, which are capable of decoding the above-described encoded data. Devices that receive the streamed data decode and reproduce the received data. In other words, the devices may each function as the image decoder, according to one aspect of the present disclosure.

### [Decentralized Processing]

Streaming server ex103 may be realized as a plurality of servers or computers between which tasks such as the processing, recording, and streaming of data are divided. For example, streaming server ex103 may be realized as a content delivery network (CDN) that streams content via a network connecting multiple edge servers located throughout the world. In a CDN, an edge server physically near a client is dynamically assigned to the client. Content is cached and streamed to the edge server to reduce load times. In the event of, for example, some type of error or change in connectivity due, for example, to a spike in traffic, it is possible to stream data stably at high speeds, since it is possible to avoid affected parts of the network by, for example, dividing the processing between a plurality of edge servers, or switching the streaming duties to a different edge server and continuing streaming.

Decentralization is not limited to just the division of processing for streaming; the encoding of the captured data may be divided between and performed by the terminals, on the server side, or both. In one example, in typical encoding, the processing is performed in two loops. The first loop is for detecting how complicated the image is on a frame-by-frame or scene-by-scene basis, or detecting the encoding load. The second loop is for processing that maintains image quality and improves encoding efficiency. For example, it is possible to reduce the processing load of the terminals and improve the quality and encoding efficiency of the content by having the terminals perform the first loop of the encoding and having the server side that received the content perform the second loop of the encoding. In such a case, upon receipt of a decoding request, it is possible for the encoded data resulting from the first loop performed by one terminal to be received and reproduced on another terminal in approximately real time. This makes it possible to realize smooth, real-time streaming.

In another example, camera ex113 or the like extracts a feature amount from an image, compresses data related to the feature amount as metadata, and transmits the compressed metadata to a server. For example, the server determines the significance of an object based on the feature amount and changes the quantization accuracy accordingly to perform compression suitable for the meaning (or content significance) of the image. Feature amount data is particularly effective in improving the precision and efficiency of motion vector prediction during the second compression pass performed by the server. Moreover, encoding that has a relatively low processing load, such as variable length coding (VLC), may be handled by the terminal, and encoding that has a relatively high processing load, such as context-adaptive binary arithmetic coding (CABAC), may be handled by the server.

In yet another example, there are instances in which a plurality of videos of approximately the same scene are captured by a plurality of terminals in, for example, a stadium, shopping mall, or factory. In such a case, for example, the encoding may be decentralized by dividing processing tasks between the plurality of terminals that captured the videos and, if necessary, other terminals that did not capture the videos, and the server, on a per-unit basis. The units may be, for example, groups of pictures (GOP), pictures, or tiles resulting from dividing a picture. This makes it possible to reduce load times and achieve streaming that is closer to real time.

Since the videos are of approximately the same scene, management and/or instructions may be carried out by the server so that the videos captured by the terminals can be cross-referenced. Moreover, the server may receive encoded data from the terminals, change the reference relationship between items of data, or correct or replace pictures themselves, and then perform the encoding. This makes it possible to generate a stream with increased quality and efficiency for the individual items of data.

Furthermore, the server may stream video data after performing transcoding to convert the encoding format of the video data. For example, the server may convert the encoding format from MPEG to VP (e.g., VP9), and may convert H.264 to H.265.

In this way, encoding can be performed by a terminal or one or more servers. Accordingly, although the device that performs the encoding is referred to as a "server" or "terminal" in the following description, some or all of the processes performed by the server may be performed by the terminal, and likewise some or all of the processes performed by the terminal may be performed by the server. This also applies to decoding processes.

### [3D, Multi-angle]

There has been an increase in usage of images or videos combined from images or videos of different scenes concurrently captured, or of the same scene captured from different angles, by a plurality of terminals such as camera ex113 and/or smartphone ex115. Videos captured by the terminals are combined based on, for example, the separately obtained relative positional relationship between the terminals, or regions in a video having matching feature points.

In addition to the encoding of two-dimensional moving pictures, the server may encode a still image based on scene analysis of a moving picture, either automatically or at a point in time specified by the user, and transmit the encoded still image to a reception terminal. Furthermore, when the server can obtain the relative positional relationship between the video capturing terminals, in addition to two-dimensional moving pictures, the server can generate three-dimensional geometry of a scene based on video of the same scene captured from different angles. The server may separately encode three-dimensional data generated from, for example, a point cloud and, based on a result of recognizing or tracking a person or object using three-dimensional data, may select or reconstruct and generate a video to be transmitted to a reception terminal, from videos captured by a plurality of terminals.

This allows the user to enjoy a scene by freely selecting videos corresponding to the video capturing terminals, and allows the user to enjoy the content obtained by extracting a video at a selected viewpoint from three-dimensional data reconstructed from a plurality of images or videos. Furthermore, as with video, sound may be recorded from relatively different angles, and the server may multiplex audio from a specific angle or space with the corresponding video, and transmit the multiplexed video and audio.

In recent years, content that is a composite of the real world and a virtual world, such as virtual reality (VR) and augmented reality (AR) content, has also become popular. In the case of VR images, the server may create images from the viewpoints of both the left and right eyes, and perform encoding that tolerates reference between the two viewpoint images, such as multi-view coding (MVC), and, alternatively, may encode the images as separate streams without referencing. When the images are decoded as separate streams, the streams may be synchronized when reproduced, so as to recreate a virtual three-dimensional space in accordance with the viewpoint of the user.

In the case of AR images, the server superimposes virtual object information existing in a virtual space onto camera information representing a real-world space, based on a three-dimensional position or movement from the perspective of the user. The decoder may obtain or store virtual object information and three-dimensional data, generate two-dimensional images based on movement from the perspective of the user, and then generate superimposed data by seamlessly connecting the images. Alternatively, the decoder may transmit, to the server, motion from the perspective of the user in addition to a request for virtual object information. The server may generate superimposed data based on three-dimensional data stored in the server, in accordance with the received motion, and encode and stream the generated superimposed data to the decoder. Note that superimposed data includes, in addition to RGB values, an α value indicating transparency, and the server sets the α value for sections other than the object generated from three-dimensional data to, for example, 0, and may perform the encoding while those sections are transparent. Alternatively, the server may set the background to a determined RGB value, such as a chroma key, and generate data in which areas other than the object are set as the background.

Decoding of similarly streamed data may be performed by the client (i.e., the terminals), on the server side, or divided therebetween. In one example, one terminal may transmit a reception request to a server, the requested content may be received and decoded by another terminal, and a decoded signal may be transmitted to a device having a display. It is possible to reproduce high image quality data by decentralizing processing and appropriately selecting content regardless of the processing ability of the communications terminal itself. In yet another example, while a TV, for example, is receiving image data that is large in size, a region of a picture, such as a tile obtained by dividing the picture, may be decoded and displayed on a personal terminal or terminals of a viewer or viewers of the TV. This makes it possible for the viewers to share a big-picture view as well as for each viewer to check his or her assigned area, or inspect a region in further detail up close.

In situations in which a plurality of wireless connections are possible over near, mid, and far distances, indoors or outdoors, it may be possible to seamlessly receive content using a streaming system standard such as MPEG-Dynamic Adaptive Streaming over HTTP (MPEG-DASH). The user may switch between data in real time while freely selecting a decoder or display apparatus including the user's terminal, displays arranged indoors or outdoors, etc. Moreover, using, for example, information on the position of the user, decoding can be performed while switching which terminal handles decoding and which terminal handles the displaying of content. This makes it possible to map and display information, while the user is on the move in route to a destination, on the wall of a nearby building in which a device capable of displaying content is embedded, or on part of the ground. Moreover, it is also possible to switch the bit rate of the received data based on the accessibility to the encoded data on a network, such as when encoded data is cached on a server quickly accessible from the reception terminal, or when encoded data is copied to an edge server in a content delivery service.

### [Web Page Optimization]

FIG. 54 illustrates an example of a display screen of a web page on computer ex111, for example. FIG. 55 illustrates an example of a display screen of a web page on smartphone ex115, for example. As illustrated in FIG. 54 and FIG. 55, a web page may include a plurality of image links that are links to image content, and the appearance of the web page differs depending on the device used to view the web page. When a plurality of image links are viewable on the screen, until the user explicitly selects an image link, or until the image link is in the approximate center of the screen or the entire image link fits in the screen, the display apparatus (decoder) may display, as the image links, still images included in the content or I pictures; may display video such as an animated gif using a plurality of still images or I pictures; or may receive only the base layer, and decode and display the video.

When an image link is selected by the user, the display apparatus performs decoding while giving the highest priority to the base layer. Note that if there is information in the HyperText Markup Language (HTML) code of the web page indicating that the content is scalable, the display apparatus may decode up to the enhancement layer. Further, in order to guarantee real-time reproduction, before a selection is made or when the bandwidth is severely limited, the display apparatus can reduce delay between the point in time at which the leading picture is decoded and the point in time at which the decoded picture is displayed (that is, the delay between the start of the decoding of the content to the displaying of the content) by decoding and displaying only forward reference pictures (I picture, P picture, forward reference B picture). Still further, the display apparatus may purposely ignore the reference relationship between pictures, and coarsely decode all B and P pictures as forward reference pictures, and then perform normal decoding as the number of pictures received over time increases.

### [Autonomous Driving]

When transmitting and receiving still image or video data such as two- or three-dimensional map information for autonomous driving or assisted driving of an automobile, the reception terminal may receive, in addition to image data belonging to one or more layers, information on, for example, the weather or road construction as metadata, and associate the metadata with the image data upon decoding. Note that metadata may be assigned per layer and, alternatively, may simply be multiplexed with the image data.

In such a case, since the automobile, drone, airplane, etc., containing the reception terminal is mobile, the reception terminal may seamlessly receive and perform decoding while switching between base stations among base stations ex106 through ex110 by transmitting information indicating the position of the reception terminal. Moreover, in accordance with the selection made by the user, the situation of the user, and/or the bandwidth of the connection, the reception terminal may dynamically select to what extent the metadata is received, or to what extent the map information, for example, is updated.

In content providing system ex100, the client may receive, decode, and reproduce, in real time, encoded information transmitted by the user.

### [Streaming of Individual Content]

In content providing system ex100, in addition to high image quality, long content distributed by a video distribution entity, unicast or multicast streaming of low image quality, and short content from an individual are also possible. Such content from individuals is likely to further increase in popularity. The server may first perform editing processing on the content before the encoding processing, in order to refine the individual content. This may be achieved using the following configuration, for example.

In real time while capturing video or image content, or after the content has been captured and accumulated, the server performs recognition processing based on the raw data or encoded data, such as capture error processing, scene search processing, meaning analysis, and/or object detection processing. Then, based on the result of the recognition processing, the server - either when prompted or automatically - edits the content, examples of which include: correction such as focus and/or motion blur correction; removing low-priority scenes such as scenes that are low in brightness compared to other pictures, or out of focus; object edge adjustment; and color tone adjustment. The server encodes the edited data based on the result of the editing. It is known that excessively long videos tend to receive fewer views. Accordingly, in order to keep the content within a specific length that scales with the length of the original video, the server may, in addition to the low-priority scenes described above, automatically clip out scenes with low movement, based on an image processing result. Alternatively, the server may generate and encode a video digest based on a result of an analysis of the meaning of a scene.

There may be instances in which individual content may include content that infringes a copyright, moral right, portrait rights, etc. Such instance may lead to an unfavorable situation for the creator, such as when content is shared beyond the scope intended by the creator. Accordingly, before encoding, the server may, for example, edit images so as to blur faces of people in the periphery of the screen or blur the inside of a house, for example. Further, the server may be configured to recognize the faces of people other than a registered person in images to be encoded, and when such faces appear in an image, may apply a mosaic filter, for example, to the face of the person. Alternatively, as pre- or post-processing for encoding, the user may specify, for copyright reasons, a region of an image including a person or a region of the background to be processed. The server may process the specified region by, for example, replacing the region with a different image, or blurring the region. If the region includes a person, the person may be tracked in the moving picture, and the person's head region may be replaced with another image as the person moves.

Since there is a demand for real-time viewing of content produced by individuals, which tends to be small in data size, the decoder first receives the base layer as the highest priority, and performs decoding and reproduction, although this may differ depending on bandwidth. When the content is reproduced two or more times, such as when the decoder receives the enhancement layer during decoding and reproduction of the base layer, and loops the reproduction, the decoder may reproduce a high image quality video including the enhancement layer. If the stream is encoded using such scalable encoding, the video may be low quality when in an unselected state or at the start of the video, but it can offer an experience in which the image quality of the stream progressively increases in an intelligent manner. This is not limited to just scalable encoding; the same experience can be offered by configuring a single stream from a low quality stream reproduced for the first time and a second stream encoded using the first stream as a reference.

### [Other Implementation and Application Examples]

The encoding and decoding may be performed by LSI (large scale integration circuitry) ex500 (see FIG. 53), which is typically included in each terminal. LSI ex500 may be configured of a single chip or a plurality of chips. Software for encoding and decoding moving pictures may be integrated into some type of a medium (such as a CD-ROM, a flexible disk, or a hard disk) that is readable by, for example, computer ex111, and the encoding and decoding may be performed using the software. Furthermore, when smartphone ex115 is equipped with a camera, video data obtained by the camera may be transmitted. In this case, the video data is coded by LSI ex500 included in smartphone ex115.

Note that LSI ex500 may be configured to download and activate an application. In such a case, the terminal first determines whether it is compatible with the scheme used to encode the content, or whether it is capable of executing a specific service. When the terminal is not compatible with the encoding scheme of the content, or when the terminal is not capable of executing a specific service, the terminal first downloads a codec or application software and then obtains and reproduces the content.

Aside from the example of content providing system ex100 that uses internet ex101, at least the moving picture encoder (image encoder) or the moving picture decoder (image decoder) described in the above embodiments may be implemented in a digital broadcasting system. The same encoding processing and decoding processing may be applied to transmit and receive broadcast radio waves superimposed with multiplexed audio and video data using, for example, a satellite, even though this is geared toward multicast, whereas unicast is easier with content providing system ex100.

### [Hardware Configuration]

FIG. 56 illustrates further details of smartphone ex115 shown in FIG. 53. FIG. 57 illustrates a configuration example of smartphone ex115. Smartphone ex115 includes antenna ex450 for transmitting and receiving radio waves to and from base station ex110, camera ex465 capable of capturing video and still images, and display ex458 that displays decoded data, such as video captured by camera ex465 and video received by antenna ex450. Smartphone ex115 further includes user interface ex466 such as a touch panel, audio output unit ex457 such as a speaker for outputting speech or other audio, audio input unit ex456 such as a microphone for audio input, memory ex467 capable of storing decoded data such as captured video or still images, recorded audio, received video or still images, and mail, as well as decoded data, and slot ex464 which is an interface for Subscriber Identity Module (SIM) ex468 for authorizing access to a network and various data. Note that external memory may be used instead of memory ex467.

Main controller ex460, which comprehensively controls display ex458 and user interface ex466, power supply circuit ex461, user interface input controller ex462, video signal processor ex455, camera interface ex463, display controller ex459, modulator/demodulator ex452, multiplexer/demultiplexer ex453, audio signal processor ex454, slot ex464, and memory ex467 are connected via bus ex470.

When the user turns on the power button of power supply circuit ex461, smartphone ex115 is powered on into an operable state, and each component is supplied with power from a battery pack.

Smartphone ex115 performs processing for, for example, calling and data transmission, based on control performed by main controller ex460, which includes a CPU, ROM, and RAM. When making calls, an audio signal recorded by audio input unit ex456 is converted into a digital audio signal by audio signal processor ex454, to which spread spectrum processing is applied by modulator/demodulator ex452 and digital-analog conversion and frequency conversion processing are applied by transmitter/receiver ex451, and the resulting signal is transmitted via antenna ex450. The received data is amplified, frequency converted, and analog-digital converted, inverse spread spectrum processed by modulator/demodulator ex452, converted into an analog audio signal by audio signal processor ex454, and then output from audio output unit ex457. In data transmission mode, text, still-image, or video data is transmitted by main controller ex460 via user interface input controller ex462 based on operation of user interface ex466 of the main body, for example. Similar transmission and reception processing is performed. In data transmission mode, when sending a video, still image, or video and audio, video signal processor ex455 compression encodes, by the moving picture encoding method described in the above embodiments, a video signal stored in memory ex467 or a video signal input from camera ex465, and transmits the encoded video data to multiplexer/demultiplexer ex453. Audio signal processor ex454 encodes an audio signal recorded by audio input unit ex456 while camera ex465 is capturing a video or still image, and transmits the encoded audio data to multiplexer/demultiplexer ex453. Multiplexer/demultiplexer ex453 multiplexes the encoded video data and encoded audio data using a determined scheme, modulates and converts the data using modulator/demodulator (modulator/demodulator circuit) ex452 and transmitter/receiver ex451, and transmits the result via antenna ex450.

When a video appended in an email or a chat, or a video linked from a web page, is received, for example, in order to decode the multiplexed data received via antenna ex450, multiplexer/demultiplexer ex453 demultiplexes the multiplexed data to divide the multiplexed data into a bitstream of video data and a bitstream of audio data, supplies the encoded video data to video signal processor ex455 via synchronous bus ex470, and supplies the encoded audio data to audio signal processor ex454 via synchronous bus ex470. Video signal processor ex455 decodes the video signal using a moving picture decoding method corresponding to the moving picture encoding method described in the above embodiments, and video or a still image included in the linked moving picture file is displayed on display ex458 via display controller ex459. Audio signal processor ex454 decodes the audio signal and outputs audio from audio output unit ex457. Since real-time streaming is becoming increasingly popular, there may be instances in which reproduction of the audio may be socially inappropriate, depending on the user's environment. Accordingly, as an initial value, a configuration in which only video data is reproduced, i.e., the audio signal is not reproduced, may be preferable; and audio may be synchronized and reproduced only when an input is received from the user clicking video data, for instance.

Although smartphone ex115 was used in the above example, three other implementations are conceivable: a transceiver terminal including both an encoder and a decoder; a transmitter terminal including only an encoder; and a receiver terminal including only a decoder. In the description of the digital broadcasting system, an example is given in which multiplexed data obtained as a result of video data being multiplexed with audio data is received or transmitted. The multiplexed data, however, may be video data multiplexed with data other than audio data, such as text data related to the video. Further, the video data itself rather than multiplexed data may be received or transmitted.

Although main controller ex460 including a CPU is described as controlling the encoding or decoding processes, various terminals often include Graphics Processing Units (GPUs). Accordingly, a configuration is acceptable in which a large area is processed at once by making use of the performance ability of the GPU via memory shared by the CPU and GPU, or memory including an address that is managed so as to allow common usage by the CPU and GPU. This makes it possible to shorten encoding time, maintain the real-time nature of streaming, and reduce delay. In particular, processing relating to motion estimation, deblocking filtering, sample adaptive offset (SAO), and transformation/quantization can be effectively carried out by the GPU, instead of the CPU, in units of pictures, for example, all at once.

### [Industrial Applicability]

The present disclosure is available for an encoder, a decoder, and the like for visually transmitting information, and applicable to a video teleconferencing system, etc.

### [Reference Signs List]

100 encoder
101 data encoder
102, 202 image selector
103, 203 image generator
104, 204 audio deriver
105, 205 feature deriver
106, 206 simulator
151, 251 circuit
152, 252 memory
200 decoder
201 data decoder
300 video teleconferencing system
400 network

## Claims

1. A decoder comprising:
circuitry; and
memory coupled to the circuitry, wherein
in operation, the circuitry:
decodes expression data indicating information expressed by a person;
generates a person equivalent image through a neural network according to the expression data and at least one profile image of the person, the person equivalent image corresponding to the person; and
outputs the person equivalent image.

2. The decoder according to claim 1, wherein
the expression data includes data originated from a video of the person.

3. The decoder according to claim 1 or 2, wherein
the expression data includes audio data of the person.

4. The decoder according to claim 1 or 2, wherein
the at least one profile image is composed of a plurality of profile images, and
the circuitry:
selects one profile image from among the plurality of profile images according to the expression data; and
generates the person equivalent image through the neural network according to the one profile image.

5. The decoder according to claim 4, wherein
the expression data includes an index indicating a facial expression of the person, and
the plurality of profile images correspond to a plurality of facial expressions of the person.

6. The decoder according to claim 1 or 2, wherein
the circuitry decodes the expression data from each of data regions in a bitstream.

7. The decoder according to claim 1 or 2, wherein
the circuitry decodes the expression data from a header of a bitstream.

8. The decoder according to claim 1 or 2, wherein
the expression data includes data indicating at least one of a facial expression, a head pose, a facial part movement, and a head movement.

9. The decoder according to claim 1 or 2, wherein
the expression data includes data represented by coordinates.

10. The decoder according to claim 1 or 2, wherein
the circuitry decodes the at least one profile image.

11. The decoder according to claim 1 or 2, wherein
the circuitry:
decodes the expression data from a first bitstream; and
decodes the at least one profile image from a second bitstream different from the first bitstream.

12. The decoder according to claim 1 or 2, wherein
the circuitry reads the at least one profile image from the memory.

13. The decoder according to claim 3, wherein
the at least one profile image is composed of one profile image, and
the circuitry:
derives, from the audio data, a first feature set indicating a mouth movement; and
generates the person equivalent image through the neural network according to the first feature set and the one profile image.

14. The decoder according to claim 3, wherein
the at least one profile image is composed of one profile image, and
the circuitry:
derives, by simulating a head movement or an eye movement, a second feature set indicating the head movement or the eye movement; and
generates the person equivalent image through the neural network according to the audio data, the second feature set, and the one profile image.

15. The decoder according to claim 3, wherein
the circuitry matches a facial expression in the person equivalent image to a facial expression inferred from the audio data.

16. An encoder comprising:
circuitry; and
memory coupled to the circuitry, wherein
in operation, the circuitry:
encodes expression data indicating information expressed by a person;
generates a person equivalent image through a neural network according to the expression data and at least one profile image of the person, the person equivalent image corresponding to the person; and
outputs the person equivalent image.

17. The encoder according to claim 16, wherein
the expression data includes data originated from a video of the person.

18. The encoder according to claim 16 or 17, wherein
the expression data includes audio data of the person.

19. The encoder according to claim 16 or 17, wherein
the at least one profile image is composed of a plurality of profile images, and
the circuitry:
selects one profile image from among the plurality of profile images according to the expression data; and
generates the person equivalent image through the neural network according to the one profile image.

20. The encoder according to claim 19, wherein
the expression data includes an index indicating a facial expression of the person, and
the plurality of profile images correspond to a plurality of facial expressions of the person.

21. A decoding method comprising:
decoding expression data indicating information expressed by a person;
generating a person equivalent image through a neural network according to the expression data and at least one profile image of the person, the person equivalent image corresponding to the person; and
outputting the person equivalent image.

22. An encoding method comprising:
encoding expression data indicating information expressed by a person;
generating a person equivalent image through a neural network according to the expression data and at least one profile image of the person, the person equivalent image corresponding to the person; and
outputting the person equivalent image.
